# EUROPEAN PATENT SPECIFICATION

(11) **EP 3 191 388 B1**
(45) Date of publication and mention of the grant of the patent: **20.01.2021**
(21) Application number: 14816089.8
(22) Date of filing: 12.12.2014
(51) Int. Cl.: B65G 69/00

(54) **WEATHER BARRIER APPARATUSES FOR SEALING OR SHELTERING VEHICLES AT LOADING DOCKS**
WETTERBARRIEREVORRICHTUNGEN ZUR ABDICHTUNG ODER ABDECKUNG VON FAHRZEUGEN AN VERLADERAMPEN
APPAREILS SERVANT DE BARRIÈRE CONTRE LES INTEMPÉRIES POUR FERMER HERMÉTIQUEMENT OU ABRITER DES VÉHICULES STATIONNÉS SUR DES QUAIS DE CHARGEMENT

(30) Priority: 11.09.2014 US 201414483956
(43) Date of publication of application: 19.07.2017
(73) Proprietor: Rite-Hite Holding Corporation, Milwaukee, Wisconsin 53223 (US)
(72) Inventor: DIGMANN, Charles, Dubuque, Iowa 52002 (US); HOFFMANN, David J., Peosta, Iowa 52068 (US); BORGERDING, Gary, Dubuque, Iowa 52003 (US)
(74) Representative: Samson & Partner Patentanwälte mbB
(86) International application number: PCT/US2014/070027
(87) International publication number: WO 2016/039790

(56) References cited:
- EP-A1- 0 307 610
- US-A- 3 403 489
- US-A- 5 473 846
- US-A1- 2010 146 876
- US-A1- 2010 269 427

## Description

### Field of the Disclosure

The present disclosure relates generally to vehicle-actuated seal members and more specifically to weather barrier apparatuses for sealing or sheltering vehicles at loading docks.

### Background

Dock weather barriers (weather barrier apparatus), such as dock seals and dock shelters, address the need to prevent the ingress of outdoor environmental conditions or contaminants (e.g., rain, snow, wind, hot/cold temperatures, insects, animals, etc.) into the interior of a building and cargo area of a vehicle during the loading or unloading of the vehicle. Dock shelters and seals also address the need to prevent the egress of conditioned air from within a building and/or a vehicle cargo area to the outdoor environment. Examples of dock seals and/or shelters with various header structures and side structures are disclosed in US patents 6,205,721; 6,233,885; 7,185,463 and 8,307,588.

Some known dock seals use side members having a compressible foam core or body surrounded by a coated fabric or vinyl outer layer. The foam core provides sufficient structural rigidity to enable the side members to be extended a short distance from the building wall surrounding the loading dock. The coated fabric outer layer protects the foam core from outdoor environmental conditions (e.g., moisture), provides wear resistance to repeated impacts from the rear portions of vehicles, and may provide desirable aesthetic qualities. Additionally, a header structure may span between and/or above the side members and is installed along a top portion of the loading dock opening. The header structure may be another compressible member similar in construction to the side members and, in some cases, may include a weighted fabric curtain that hangs downwardly to contact the top of a truck trailer to form an environmental barrier along the top of the trailer.

Another type of dock seal uses inflatable side members and a header structure having internal compressible resilient pads, which provide some degree of side member compressibility when the side members are in a deflated condition. In either case, when the rear portion of a vehicle (e.g., a truck trailer) is backed into either foam or inflatable dock seal side and header members, the side and header members are compressed toward the building wall to form a seal along the lateral and top back edges of the vehicle. If present, the head curtain sweeps along the top of the trailer to form a seal at the top of the trailer between the side members. Dock seals typically consume a relatively small amount of wall space and can provide a relatively high quality seal between the rear edges of a vehicle and the outside building wall surrounding the dock. However, when the dock seal side members are compressed, they may be displaced into or otherwise encroach on the opening to the rear of the docked vehicle. As a result, the compressed side member may interfere with operation of a fork lift and/or an operator during loading and unloading activities. In addition, inflatable dock seals are susceptible to power losses and tears that compromise the ability of the side members to inflate to provide an acceptable seal.

In contrast to dock seals, some known dock shelters use side members that are mounted to the outside building wall surrounding the loading dock. The side members are spaced well to the outside of the sides of a docked vehicle. The side members are configured to extend (i.e., to be cantilevered) an appreciable distance from the outside building wall, particularly in cases where a dock leveler protrudes from the dock opening. The side members may also support flexible seal members or side curtains extending inwardly from the side members across at least a portion of the opening defined by the side members. When a vehicle such as, for example, a truck trailer, is backed into the opening of the dock shelter, the inwardly facing edges of the seal members or side curtains resiliently deflect and sweep against the lateral sides of the trailer to form an environmental barrier therebetween. As with dock seals, dock shelters also typically include a header structure, which may include a head curtain, to form an environmental barrier along the top edge of the rear of the vehicle.

In contrast to dock seals, dock shelters typically provide unobstructed access to a vehicle cargo area opening (i.e., there are no foam pads or the like to be compressed and displaced into the opening). However, most known dock shelter side members are constructed using rigid wood, fiberglass or metal frames capable of supporting the significant weight of the seal members or side curtains, which are usually held at an appreciable distance (e.g., several feet) from the building wall. Such side members may be permanently deformed if they are impacted by a vehicle. Accordingly, bumpers or stops may be mounted to the lower edge of the dock shelter to prevent a vehicle (e.g., a truck trailer) from impacting and damaging the rigid shelter.

The rigid side members used to implement these known dock shelters are also typically mechanically coupled via the header and/or another rigid member to provide increased lateral rigidity to the dock shelter to minimize the ability of the side members to move from side-to-side. Because of this, the side members typically have to be mounted relatively far apart to accommodate a wide range of possible off-center vehicle positions. This relatively large distance between the rigid side members consumes a significant and, thus, expensive amount of building wall space for each loading dock opening.

More recently, dock shelters having impactable side members have been developed. The impactable side members are similar to those used with dock seals and typically use a foam core or body surrounded by a coated fabric outer layer. Seal members or side curtains, which may be constructed using a fabric and flexible fiberglass stays combination or a foam core and fabric combination, are typically mounted to the side members to extend at least partially across the shelter opening. When a vehicle is backed into the shelter, the inwardly facing edges of the seal members or side curtains deflect and sweep against the sides of the vehicle to form an environmental barrier or seal against the sides of the vehicle. In the event the off-center position of a vehicle results in the rear of the vehicle impacting a side member, the foam core or body of the side member is resiliently compressed. When the vehicle is pulled away from an impacted side member, the foam core of the side member causes the side member to substantially recover to its original condition or shape.

The areas of a loading dock shelter where the side seal members and the header's upper seal member meet and interact can cause sealing and wear problems. In some instances, a relatively stiff head curtain or other header sealing member will interfere with the side seal member's ability to seal along the vehicle's rear edge, near the roof of the vehicle. Because the upper seal member of a header structure is generally wider than the widest truck, the upper seal member overlaps the upper portion of the side seal members. As the vehicle pushes the lower edge of the header's upper seal member back towards the dock, the lower corners of the header's upper seal member will contact and push the face of the side seal member away from the side of the vehicle, thereby preventing a good seal in that area. There can also be excessive wear on the portion of the upper seal member that overlaps the side seal member. As the vehicle backs in and penetrates the weather barrier apparatus, the header's upper seal member can be pinched and dragged between the vehicle and the side seal members. This often causes premature wear on the side seal members.

In some examples, the areas of a loading dock shelter where the side seal members and the header's upper seal member meet and interact can cause sealing and wear problems. In some instances, a side curtain may interfere with the head curtain or other header seal member's ability to seal along a roof of a vehicle. The side seal, in some instances, can be positioned in front of, and can overlap an end portion of a header seal. As the vehicle pushes an upper portion of the side seal member back towards the dock, the upper portion of the side seal member may contact and push the face of the header curtain seal away from the roof of the vehicle, which may impede or hamper a seal in that area. There can also be excessive wear on the portion of the side seal member that overlaps the header curtain. As the vehicle backs in and penetrates the weather barrier apparatus, the side seal member can be pinched and dragged between the vehicle and the header curtain. This may cause premature wear on the header curtain.

US 2010/0269427 A1 discloses a weather barrier apparatus according to the preamble of independent claims 1 and 10. More specifically, a head curtain assembly is disclosed particularly suited for a dock seal having lateral weather barriers in the form a resiliently compressible side pads. To minimize wear, the side pads include one or more cavities that reduce the compressive forces in certain localized areas when the side pads are compressed by the rear end of a vehicle.

US 5 473 846 A discloses a loading dock shelter having a rotating seal member for forming a relatively air-tight seal between the dock opening and the truck to prevent the movement of air between the inside and outside of the building during the loading and unloading operation. The seal members are rotatably mounted to the frame assembly for rotation between a first (open) position and a second (sealing) position in response to the movement of the truck into and out of the loading dock. In the first position, the seal member is spaced outwardly from the wall and the loading dock so that it does not interfere with the normal operation of the loading dock and so that it projects into the path of the truck for engaging the truck as the truck backs into the loading dock. After the truck initially engages the seal members, the rearward movement of the truck rotates the seals from the open position to the sealing position in which the seal member is compressed against the outer wall of the truck so that it does not block or otherwise interfere with the normal loading/unloading of the truck.

### Summary of the Invention

The present invention provides a weather barrier apparatus according to the subject-matter of independent claims 1 and 10.

Preferred embodiments of the invention are set forth in the dependent claims.

### Brief Description of the

### Drawings

Figure 1 is a partial cutaway perspective view of an example weather barrier apparatus constructed in accordance with the teachings disclosed herein. The weather barrier apparatus is shown in a relaxed configuration with a vehicle at a departed position.
Figure 2 is a perspective view similar to Figure 1 but showing the example weather barrier apparatus in an activated configuration with the vehicle in the parked position.
Figure 3 is a cross-sectional view taken along line 3-3 of Figure 1.
Figure 4 is a cross-sectional view taken along line 4-4 of Figure 2.
Figure 5 is a cross-sectional view similar to Figure 3 but showing a lower vehicle.
Figure 6 is a cross-sectional view similar to Figure 5 but showing the example weather barrier apparatus in an activated configuration.
Figure 7 is a cross-sectional view taken along line 7-7 of Figure 5.
Figure 8 is a cross-sectional view taken along line 8-8 of Figure 6.
Figure 9 is a perspective view of an example side structure constructed in accordance with the teachings disclosed herein.
Figure 10 is a perspective view of another example side structure constructed in accordance with the teachings disclosed herein.
Figure 11 is a perspective view of another example side structure constructed in accordance with the teachings disclosed herein.
Figure 12 is a perspective view of an example side structure with an example cover constructed in accordance with the teachings disclosed herein.
Figure 13 is a perspective view similar to Figure 12 but showing the example cover open.
Figure 14 is a perspective view of another example side structure with another example cover constructed in accordance with the teachings disclosed herein.
Figure 15 is a perspective view similar to Figure 14 but showing the example cover open.
Figure 16 is a perspective view of another example side structure with another example cover constructed in accordance with the teachings disclosed herein.
Figure 17 is a perspective view similar to Figure 16 but showing the example cover open.
Figure 18 is a perspective view of another example side structure with another example cover constructed in accordance with the teachings disclosed herein.
Figure 19 is a perspective view similar to Figure 18 but showing the example cover open.
Figure 20 is a perspective view of another example side structure with another example cover constructed in accordance with the teachings disclosed herein.
Figure 21 is a perspective view similar to Figure 20 but showing the example cover open.
Figure 22 is a perspective view of an example weather barrier apparatus with an example cover constructed in accordance with the teachings disclosed herein.
Figure 23 is a perspective view similar to Figure 22 but showing the example weather barrier apparatus in an activated configuration.
Figure 24 is a perspective view of an example weather barrier apparatus with an example cover constructed in accordance with the teachings disclosed herein.
Figure 25 is a perspective view similar to Figure 24 but showing the example weather barrier apparatus in an activated configuration.
Figure 26 is a cross-sectional view similar to Figure 5 but showing less detail.
Figure 27 is a cross-sectional view similar to Figure 6 but showing less detail.
Figure 28 is a cross-sectional view similar to Figure 26 but showing an alternate example of a weather barrier apparatus constructed in accordance with the teachings disclosed herein.
Figure 29 is a cross-sectional view similar to Figure 28 but showing the example weather barrier apparatus in an activated configuration.
Figure 30 is a cross-sectional view similar to Figure 26 but showing another example of a weather barrier apparatus constructed in accordance with the teachings disclosed herein.
Figure 31 is a cross-sectional view similar to Figure 30 but showing the example weather barrier apparatus in an activated configuration.
Figure 32 is a cross-sectional view similar to Figure 26 but showing another example of a weather barrier apparatus constructed in accordance with the teachings disclosed herein.
Figure 33 is a cross-sectional view similar to Figure 32 but showing the example weather barrier apparatus in an activated configuration.
Figure 34 is a cross-sectional view similar to Figure 26 but showing another example of a weather barrier apparatus constructed in accordance with the teachings disclosed herein.
Figure 35 is a cross-sectional view similar to Figure 34 but showing the example weather barrier apparatus in an activated configuration.
Figure 36 is a cross-sectional view similar to Figure 26 but showing another example of a weather barrier apparatus constructed in accordance with the teachings disclosed herein.
Figure 37 is a cross-sectional view similar to Figure 36 but showing the example weather barrier apparatus in an activated configuration.
Figure 38 is a cross-sectional view similar to Figure 26 but showing another example of a weather barrier apparatus constructed in accordance with the teachings disclosed herein.
Figure 39 is a cross-sectional view similar to Figure 38 but showing the example weather barrier apparatus in an activated configuration.
Figure 40 is a cross-sectional view similar to Figure 26 but showing another example of a weather barrier apparatus constructed in accordance with the teachings disclosed herein.
Figure 41 is a cross-sectional view similar to Figure 40 but showing the example weather barrier apparatus in an activated configuration.
Figure 42 is a cross-sectional view similar to Figure 26 but showing another example of a weather barrier apparatus constructed in accordance with the teachings disclosed herein.
Figure 43 is a cross-sectional view similar to Figure 42 but showing the example weather barrier apparatus in an activated configuration.
Figure 44 is a cross-sectional view similar to Figure 26 but showing another example of a weather barrier apparatus constructed in accordance with the teachings disclosed herein.
Figure 45 is a cross-sectional view similar to Figure 44 but showing the vehicle (in phantom lines) engaging the example weather barrier apparatus.
Figure 46 is a cross-sectional view similar to Figure 44 but showing the example weather barrier apparatus in an activated configuration.
Figure 47 is a cross-sectional view similar to Figure 26 but showing another example of a weather barrier apparatus constructed in accordance with the teachings disclosed herein.
Figure 48 is a cross-sectional view similar to Figure 47 but showing the vehicle (in phantom lines) engaging the example weather barrier apparatus.
Figure 49 is a cross-sectional view similar to Figure 47 but showing the example weather barrier apparatus in an activated configuration.
Figure 50 is a cross-sectional view taken along line 50-50 of Figure 52.
Figure 51 is a cross-sectional view taken along line 51-51 of Figure 53.
Figure 52 is a cross-sectional view similar to Figure 5 but showing another example of a weather barrier apparatus constructed in accordance with the teachings disclosed herein.
Figure 53 is a cross-sectional view similar to Figure 52 but showing the example weather barrier apparatus in an activated configuration.
Figure 54 is an exploded perspective view of an example side structure with an example seal core constructed in accordance with the teachings disclosed herein.
Figure 55 is an exploded perspective view of another example side structure with another example seal core constructed in accordance with the teachings disclosed herein.
Figure 56 is a perspective view of the example side structure shown in Figure 55 but showing the side structure assembled.
Figure 57 is a cross-sectional view taken along line 57-57 of Figure 56.
Figure 58 is a cross-sectional view similar to Figure 57 but showing another example of a side structure constructed in accordance with the teachings disclosed herein.
Figure 59 is an exploded perspective view similar to Figure 54 but showing an alternate example of a seal core constructed in accordance with the teachings disclosed herein.
Figure 60 is an exploded perspective view similar to Figure 54 but showing another example of a seal core constructed in accordance with the teachings disclosed herein.
Figure 61 is an exploded perspective view similar to Figure 54 but showing another example of a seal core constructed in accordance with the teachings disclosed herein.
Figure 62 is an exploded perspective view similar to Figure 54 but showing another example of a seal core constructed in accordance with the teachings disclosed herein.
Figure 63 is a perspective view similar to Figure 22 but showing another example weather barrier apparatus with an example cover constructed in accordance with the teachings disclosed herein.
Figure 64 is a perspective view similar to Figure 14 but showing another example weather barrier apparatus with an example cover constructed in accordance with the teachings disclosed herein.
Figure 65 is a perspective view of a vehicle backing into the example weather barrier apparatus shown in Figure 64.
Figure 66 is a perspective view of a vehicle backing farther into the example weather barrier apparatus shown in Figures 64 and 65.
Figure 67 is a partial perspective of another example weather barrier apparatus constructed in accordance with the teachings disclosed herein.
Figure 68 is a partial, exploded view of the example weather barrier apparatus of Figure 67.
Figure 69 is a side view of the example weather barrier apparatus of Figures 67 and 68.
Figure 70 is a partial, perspective view of the example weather barrier apparatus of Figures 67-69 shown in a deflected condition.
Figure 71 is a side view of the example weather barrier apparatus of Figure 69.

### Detailed Description

The invention is defined by the independent claims. Embodiments of the invention will be apparent from the dependent claims. The further aspects and examples are for illustration only. Example weather barrier apparatuses for sealing or sheltering a vehicle at a loading dock are disclosed herein. Examples include a horizontally elongate upper seal member for sealing against the vehicle's roof and two vertically elongate side seal members for sealing against the sides and/or rear edges of the vehicle. The upper seal member is longer than the widest anticipated vehicle, and the side seal members are taller than the highest vehicle, so opposite ends of the upper seal member overlap the upper ends of the side seal members at two upper corners of some weather barrier apparatuses. Near these corners, each side seal member has an opening or pocket that provides room for the opposite ends of the upper seal member to pass through or penetrate the side seal members. Some side seal members have a hook-style rear edge seal with a slot for accommodating the vehicle's upper rear edge.

According to the invention, a first seal (e.g., an upper seal or a side seal) is to be engaged by a vehicle as the vehicle moves between a departed position (e.g., a vehicle not in engagement with the weather barrier apparatus) and a parked position (e.g., a vehicle in engagement with the weather barrier apparatus) relative to the first seal. The first seal has a penetration portion movable between a non-deflected position when the vehicle releases the first seal and a deflected position when the vehicle engages the first seal. A second seal (e.g., an upper seal or a side seal) is to be coupled adjacent the first seal. The second seal has an opening to be positioned adjacent the penetration portion of the first seal to enable at least the penetration portion to extend across at least a portion of the opening when the first seal is in the non-deflected position. The opening of the second seal is to receive at least the penetration portion of the first seal when the first seal is in the deflected position.

According to the invention, the weather barrier apparatus disclosed herein includes a side support member attachable to a wall proximate a doorway. A side seal member extends from the side support member and toward a center of the doorway when the weather barrier apparatus is in a non-deflected position (e.g., not in engagement with a vehicle). At least a portion of the side seal member extends, bends and/or deflects toward the doorway and/or the wall when the weather barrier apparatus is in a deflected position (e.g., being engaged by a vehicle). An upper seal is attachable to the wall and positioned adjacent the side support member such that a first portion of the upper seal and a second portion of the side seal overlap to define an interface. The first portion of the upper seal does not engage the second portion of the side seal at the interface when the weather barrier is in a non-deflected position. At least one of the side seal or the upper seal has an opening to receive at least a portion of the other one of the side seal or the upper seal when the weather barrier apparatus is in the deflected position.

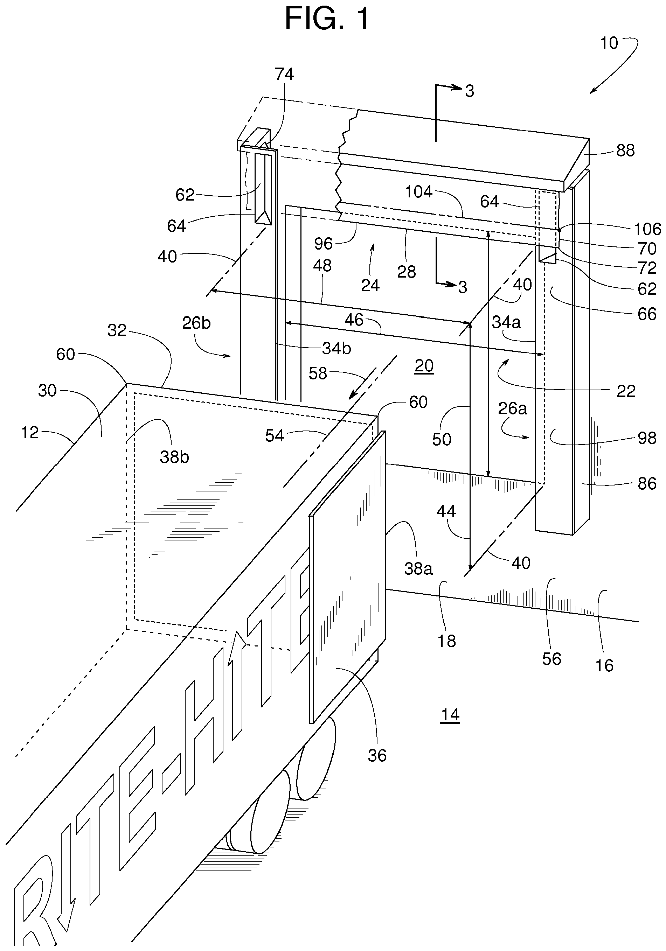

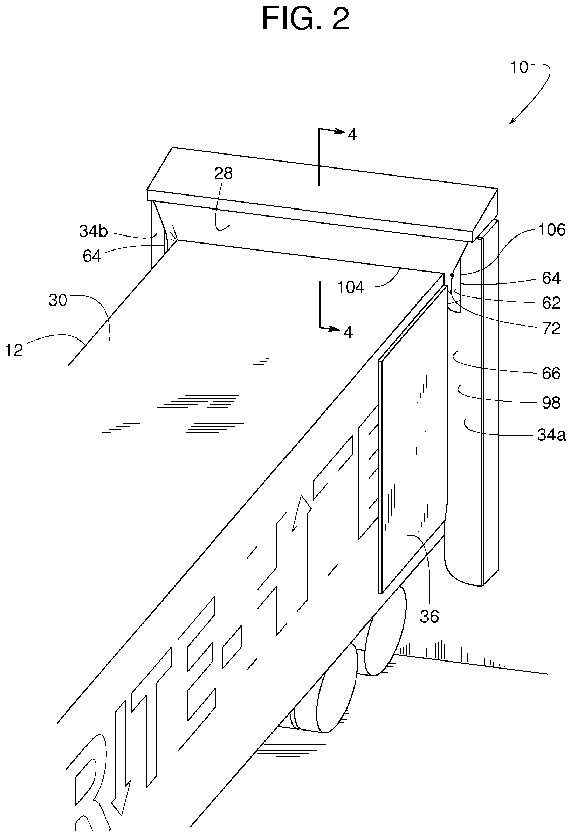

Figures 1 - 62 show an example weather barrier apparatus 10 and examples of its various alternatives, modifications and components for sealing or sheltering a vehicle 12 (e.g., truck, trailer, etc.) parked at a loading dock 14 of a building 16. The building 16 includes a wall 18 and a doorway 20 through which cargo is transferred between the vehicle 12 and an interior dock area 22 of the building 16. The weather barrier apparatus 10 disclosed herein are configurable selectively to a relaxed configuration (e.g., a non-deflected condition) separated from or not engaged by the vehicle 12 (e.g., Figs. 1, 3, 5, 7, 22, 24, 26, 28, 30, 32, 34, 36, 38, 40, 42, 44, 47, 50, 52, 57, 58, 63, and 64) and an activated or deflected configuration engaging the vehicle 12 (e.g., Figs. 2, 4, 6, 8, 23, 25, 27, 29, 31, 33, 35, 37, 39, 41, 43, 46, 49, 51 and 53). When separated from the example weather barrier apparatus disclosed herein, the vehicle 12 is in a departed position. When engaging the example weather barrier apparatus disclosed herein (e.g., as shown in Figs. 2, 4, 6, 8, 23, 25, 27, 29, 31, 33, 35, 37, 39, 41, 43, 46, 49, 51 and 53) vehicle 12 is in a parked position.

In some examples, the weather barrier apparatus 10 includes a generally horizontally elongate header structure 24 proximate the top of the doorway 20 and two generally vertically elongate side structures 26a and 26b proximate the side edges of the doorway 20. The header structure 24 includes an upper seal member 28 for sealing against a roof 30 and/or an upper rear edge 32 of the vehicle 12, and the side structures 26a and 26b include the side seal members 34a and 34b, respectively, for sealing against a side panel 36 and/or for sealing against the vertical rear edges 38a and 38b of the vehicle 12. Examples of the side panel 36 include, but are not limited to, an outward facing surface of an open rear door and a sidewall of a trailer or truck. In some examples, the side structure 26b and the side seal member 34b are mirror images of their respective the side structure 26a and the side seal member 34a, so descriptions of the side structure 26a and the side seal member 34a apply to their mirror-image counterparts as well.

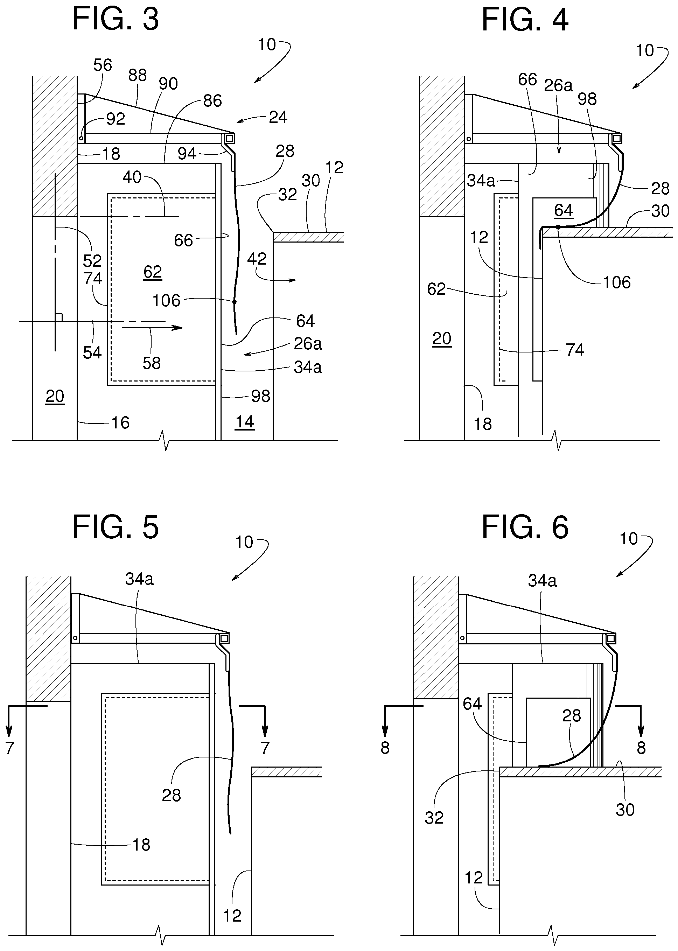

When the weather barrier apparatus 10 in the activated configuration is sealing or sheltering the vehicle 12 in the parked position, cargo can be transferred along a cargo passageway 40 between the vehicle 12 and the building 16. The cargo passageway 40 is defined as a projection of doorway 20 leading to a rear access opening 42 (Fig. 3) in the vehicle 12, where the cargo passageway 40 has a passageway height 44 and a passageway width 46 equal to the building's doorway height 50 and width 48, respectively. The doorway's height 50 and the width 48 lie along a plane 52 (Fig. 3) that is generally parallel to the wall 18. A line 54 perpendicular to the plane 52 extends parallel to the general direction along which cargo would normally travel through the passageway 40. The wall 18 has an exterior surface 56 facing in a forward direction 58 parallel to the line 54. The terms "plane" and "line" means that the plane and the line pertain to geometry as opposed to an actual physical structure.

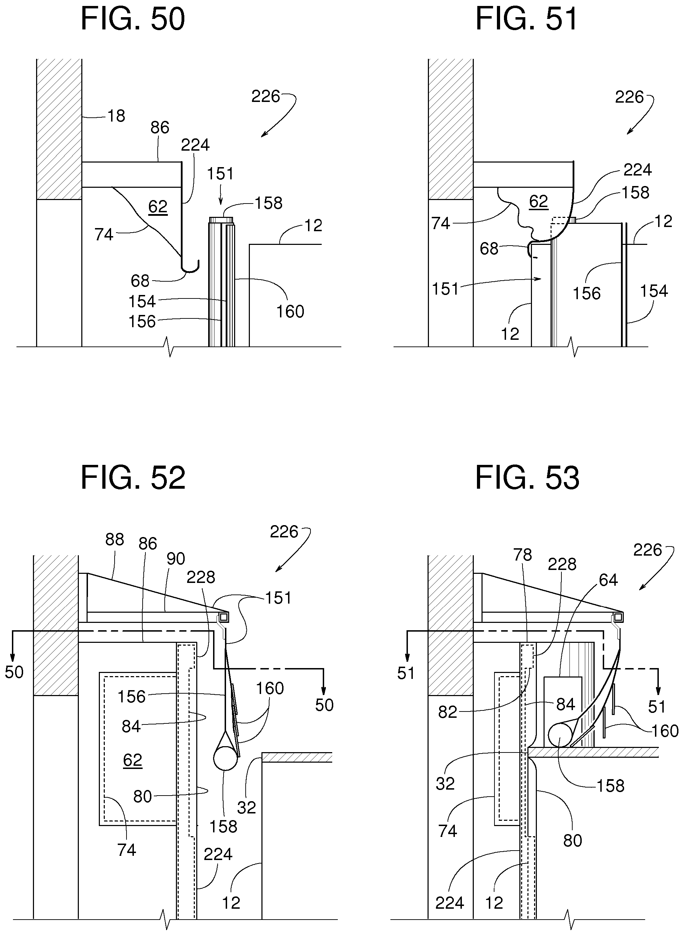

In order to seal vehicles of various widths and heights, the side seal members 34a and 34b are taller than a highest anticipated vehicle, and the upper seal member 28 is horizontally longer than a widest anticipated vehicle. Consequently, the ends of the upper seal member 28 may overlap the side seal members 34a and 34b near the vehicle's upper rear corners 60. To effectively seal against the upper rear corners 60 of the vehicle 12 without the upper seal member 28 forcefully pressing against, abrading, displacing and/or interfering with the side seal member 34a and 34b at those corners, and to effectively seal against the vehicle's vertical rear edge 38a without the vehicle's upper rear edge 32 adversely displacing a hook-style rear edge seal in an area near the vehicle's upper rear corners 60, some examples of the side seal members 34a and 34b include features that provide clearance in those difficult areas. Examples of such clearance features include a header-receiving chamber or pocket 62 behind side seal member 34a, an opening 64 (e.g., hole, void, space, cavity, etc.) defined by a front panel 66 of side seal member 34a, and/or a special hook-style rear edge seal 68 (e.g., Figs. 50 and 51). These clearance features function as follows.

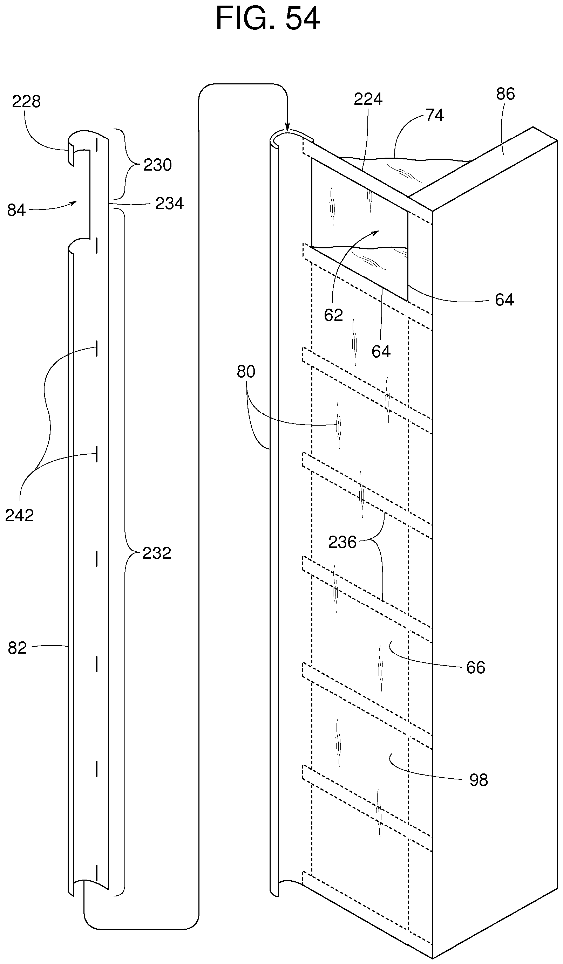

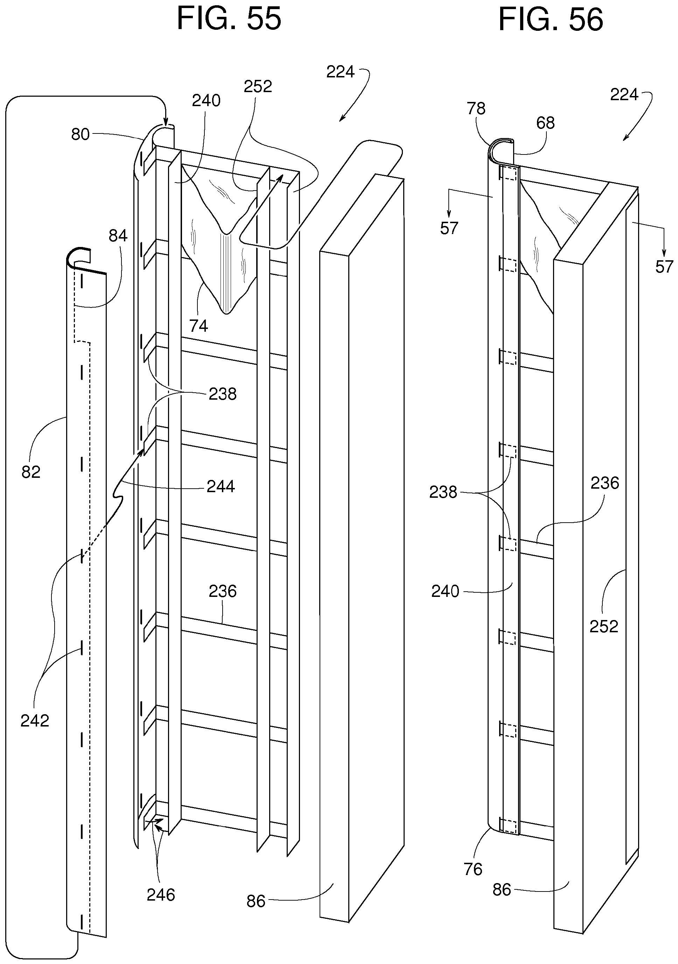

As the vehicle 12 backs into and deflects the seal members 28, 34a and 34b, the opening 64 in the front panel 66 of the side seal member 34a allows a portion of the header structure 24 to pass through or penetrate the side seal member 34a, rather than displace it adversely. Examples of such a penetrating portion of the header structure 24 include, but are not limited to, a lateral edge 70 of upper seal member 28, a lower corner point 72 or the lowermost corner of upper seal member 28, etc. According to the invention, the opening 64 leads to the header-receiving chamber 62, which is enclosed by a back sheet 74 to prevent air from flowing through the opening 64 and bypassing the side seal member 34a. In some examples, as shown in Figures 50 - 57, the rear edge seal 68 of the side seal member 34a is generally vertically elongate from a lower end 76 to an upper end 78 (Fig. 56) and includes a relatively stiff hook-shaped seal core 82 (Fig. 54) encased within a pliable seal cover 80. The hook profile allows the rear edge seal 68 to wrap around and seal against the vehicle's vertical rear edge 38a while, in some examples, the seal core 82 includes a notch or gap 84 that provides clearance for the vehicle's upper rear edge 32. The seal cover 80 spans the gap 84 and is sufficiently pliable to conform and seal around the vehicle's upper rear edge 32 in the area of the gap 84.

In the example illustrated in Figures 1 - 8, the weather barrier apparatus 10 shows the side seal member 34a attached to a side support member 86, which is mounted to the wall 18. The side support member 86 is schematically illustrated to represent any structure having any generally horizontal cross-sectional shape that can support the side seal member 34a such that the side seal member 34a can resiliently flex or move in reaction to the vehicle 12 backing into the weather barrier apparatus 10. In some examples, the side support member 86 is made of a resiliently compressible polyurethane foam core encased within a pliable or flexible sheet of material (e.g., encased within a vinyl coated fabric).

In the example shown in Figures 1 - 8, the upper seal member 28 is in the form of a flexible curtain suspended from an upper support member 88 of the header structure 24. In some examples, the upper support member 88 includes a frame 90 attached to the wall 18. In some examples, the frame 90 is pivotal about a pin 92 (Fig. 3), which allows the frame 90 to tilt upward in reaction to an exceptionally high vehicle backing into the weather barrier apparatus 10. To provide the upper seal member 28 with a desirable radius of rotation, a lower hanging the bracket 94 connects an upper edge of the upper seal member 28 to a front end of the frame 90. To protect the frame 90 and the bracket 94 from vehicular impact, some examples of the bracket 94 are more resiliently flexible than the frame 90 so that the bracket 94 can deflect rather than the bracket 94 or the frame 90 permanently bending or breaking upon being struck by a vehicle.

Figures 1 - 8 show how the lowermost corner point 72 of the seal member's lower edge 96 can pass through the opening 64 and protrude into the header-receiving chamber 62. Figures 1, 3, 5 and 7 show the vehicle 12 approaching the weather barrier apparatus 10 while the upper seal member 28 and the side seal member 34a extend into the cargo passageway 40. In some examples, when the weather barrier apparatus 10 is in the relaxed configuration, a front surface 98 on the front panel 66 of the side seal member 34a faces generally in a forward direction away from the doorway 20. Figures 2, 4, 6 and 8 show the vehicle 12 having deflected the side seal member 34a such that the side seal member 34a seals against the vehicle's side panel 36 and/or the vehicle's vertical rear edge 38a. In some examples, at least some portions of the front surface 98 become curved as the vehicle 12 deflects the side seal member 34a. Figures 2, 4, 6 and 8 also show the vehicle 12 having deflected the upper seal member 28 such that the upper seal member 28 seals against the vehicle's roof 30 and/or against the vehicle's upper rear edge 32. When the weather barrier apparatus 10 is in the activated configuration, the side seal member's front surface 98 engages the vehicle 12 and faces away from the upper seal member's lower corner point 72(i.e., corner point 72 is now behind the side seal member's front surface 98). Figures 5 - 8 show the vehicle 12 being at a lower elevation and traveling closer to the wall 18 than what is shown in Figures 3 and 4. In some examples, such differences can determine where the seal members 28 and 34a seal against the vehicle 12.

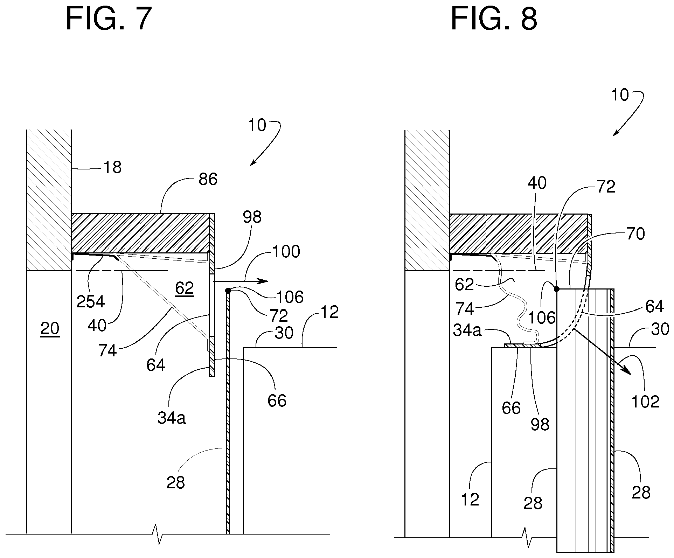

Figure 7 shows the opening 64 facing in a first direction 100 when weather barrier apparatus 10 is in the relaxed configuration. Figure 8 shows the opening 64 facing in a different direction 102 when the weather barrier apparatus 10 is in the activated configuration. The change in direction facilitates at least a portion of the upper seal member 28 protruding into the opening 64 as the side seal member's front panel 66 deflects to place the front surface 98 in sealing contact with the vehicle 12. In some examples, to ensure the side seal member 34a reaches and sealingly engages the vehicle 12, the side seal member 34a extends laterally farther into cargo the passageway 40 when the weather barrier apparatus 10 is in the relaxed configuration (Fig. 7) than when the weather barrier apparatus 10 is in the activated configuration (Fig. 8).

Figures 1 - 4, 7 and 8 also show the upper seal member 28 being generally horizontally elongate along a substantially linear line segment 104 terminating at an endpoint 106 on the upper seal member 28. The line segment 104 lies along roof 30 when the weather barrier apparatus 10 is in the activated configuration with the vehicle 12 in the parked position, as shown in Figures 2, 4 and 8. The endpoint 106 is spaced apart from the roof 30 even when the weather barrier apparatus 10 is in the activated configuration with the vehicle 12 in the parked position. The seal member's front surface 98, as shown in Figure 8, faces away from the endpoint 106 when the weather barrier apparatus 10 is in the activated configuration.

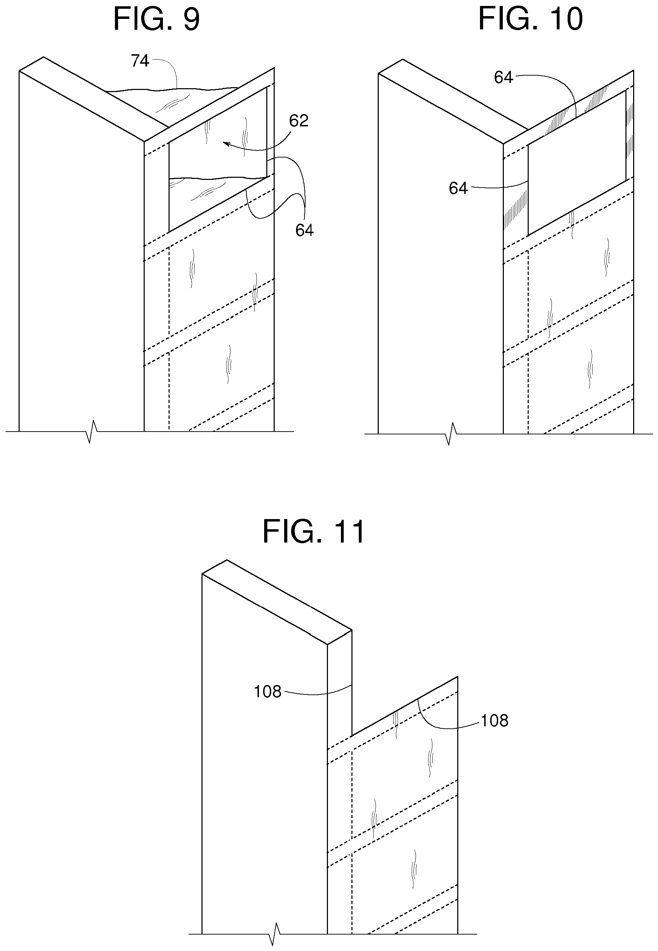

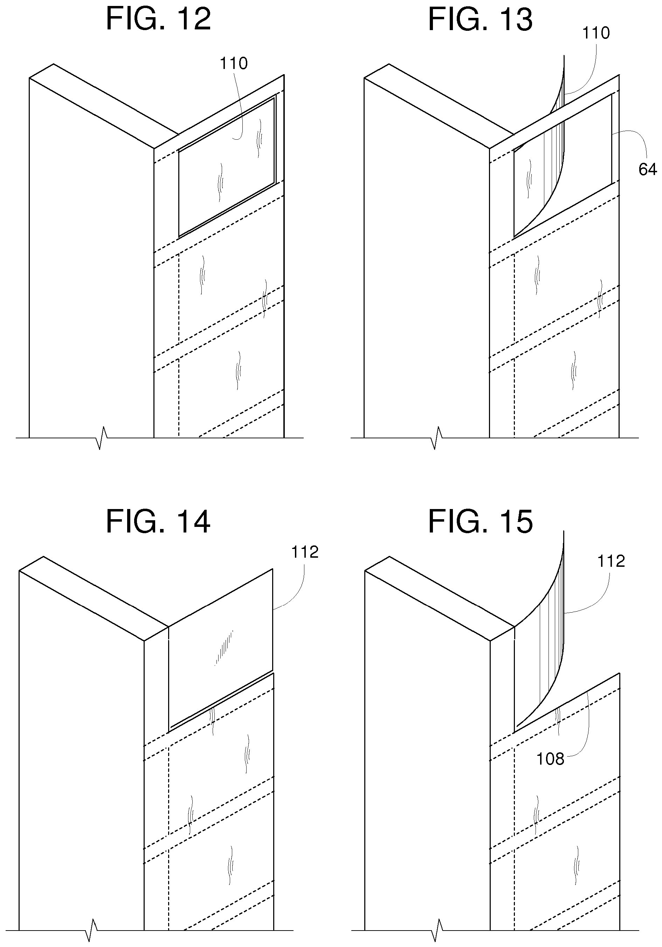

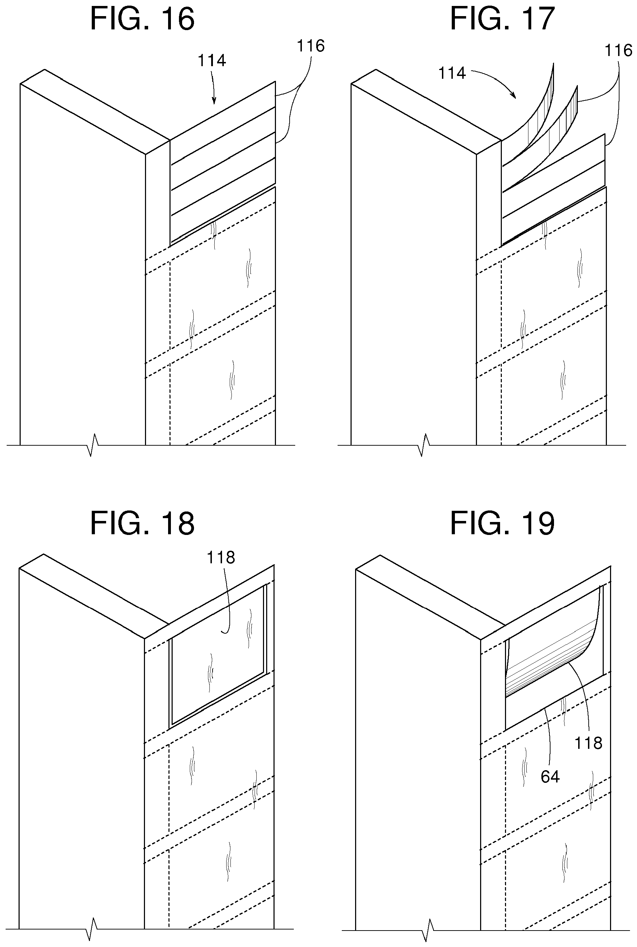

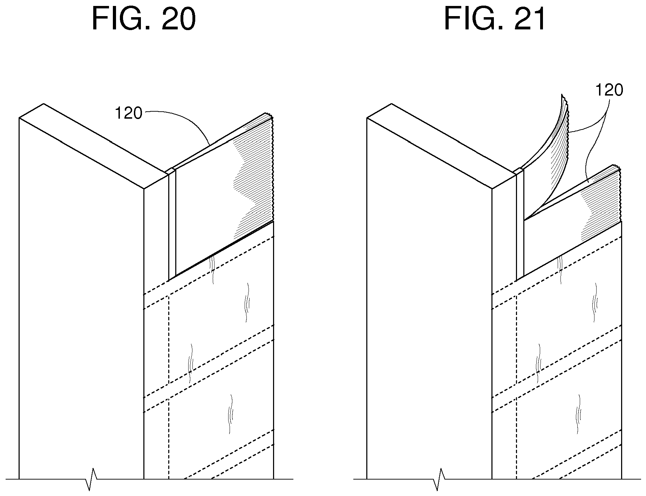

Figures 9 - 25 illustrate various examples of side seal member openings that provide penetrating clearance for an upper seal member's lowermost corner. Figure 9 shows the opening 64 leading to the header-receiving chamber 62, wherein the back sheet 74 encloses the back end of the chamber 62. The header-receiving chamber 62 can be of any shape, examples of which include, but are not limited to, triangular, rectangular, partially spherical, partially cylindrical, irregular, etc. In some examples, a cover (such as the example covers shown in Figs. 12 - 25) extends across and obstructs the opening 64. In some examples, there is no cover across the opening 64, as shown in Figures 9 and 10. Figure 10 further shows the opening 64 without enclosed the chamber 62. Figure 11 shows an opening 108 that is not entirely surrounded by a frame. Figures 12 and 13 show a horizontally pivotal cover 110 across the opening 64, where Figure 12 shows the cover 110 in a closed position, and Figure 13 shows the cover 110 in an open position. Figures 14 and 15 show a horizontally pivotal cover 112 across an opening 108. Figure 14 shows the cover 112 in a closed position, and Figure 15 shows the cover 112 in an open position. Figures 16 and 17 show an example cover 114 including a plurality of independently pivotal segments 116. In some examples, a pliable web (not shown) extends between adjacent segments 116 to help prevent air from flowing between the segments 116. Figures 18 and 19 show a vertically pivotal cover 118 across the opening 64. Figure 18 shows the cover 118 in a closed position, and Figure 19 shows the cover 118 in an open position. Figures 20 and 21 show a cover 120 including a brush with a plurality of bristles. Figure 20 shows the cover 120 in a closed position, and Figure 21 shows the cover 120 in an open position.

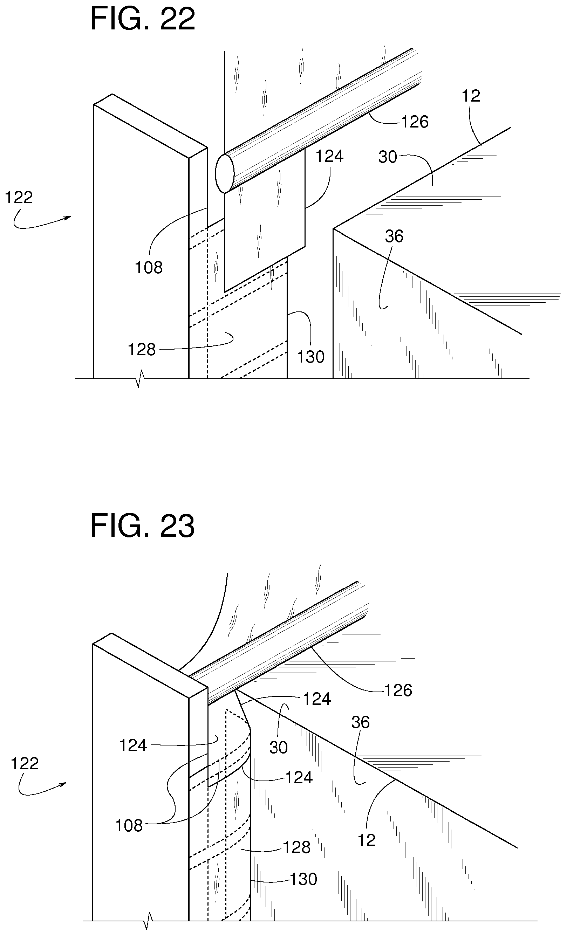

Figures 22 and 23 show an example weather barrier apparatus 122 with a cover 124 extending across the opening 108. In this example, the cover 124 hangs downward from an example upper seal member 126. As the vehicle 12 backs into the weather barrier apparatus 122 from the position shown in Figure 22 to the position shown in Figure 23, the vehicle 12 forces the upper seal member 126 up on top of the vehicle's roof 30. The vehicle 12 also forces the upper seal member 126 back through the opening 108 while the cover 124 overhangs and covers the opening 108. In the activated configuration shown in Figure 23, a front surface 128 of a side seal member 130 deflects to seal against the vehicle's side panel 36.

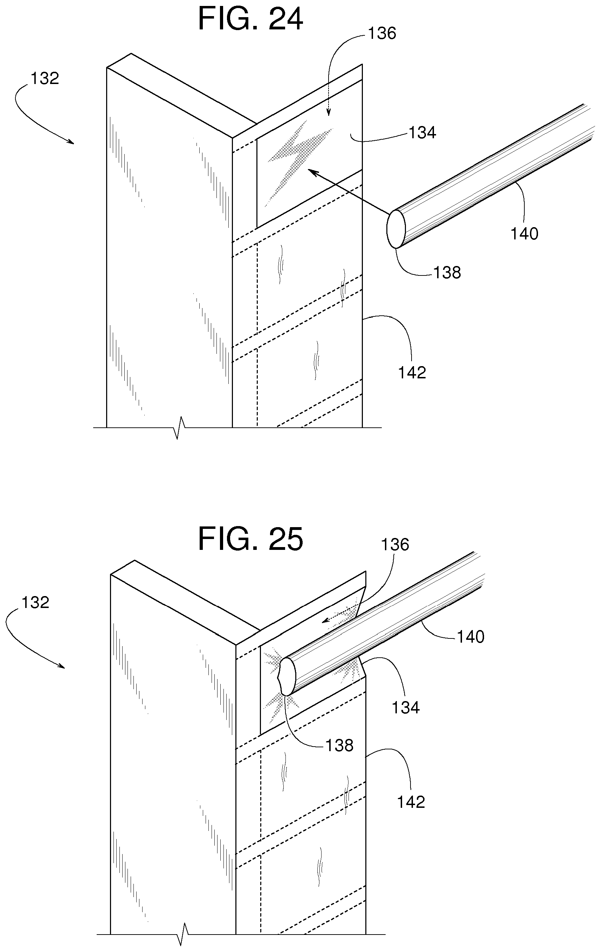

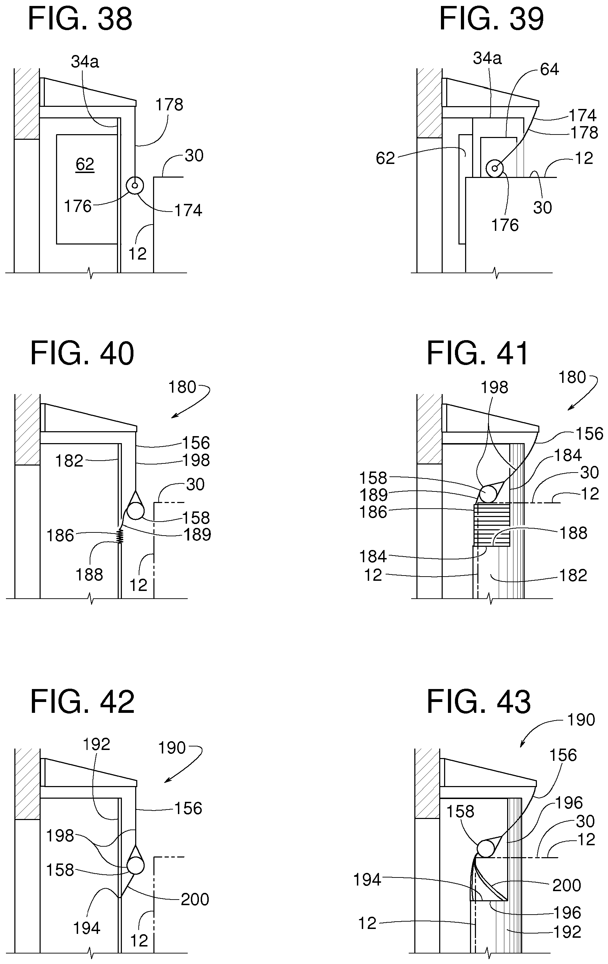

In the example shown in Figures 24 and 25, an example weather barrier apparatus 132 includes a side seal member 142 with a resiliently flexible or otherwise expandable cover 134 extending across and covering and/or obstructing an opening 136 or an open area behind the cover 134. Examples of the expandable cover 134 include, but are not limited to, corrugated material, elastic material, latex, etc. When a vehicle backs into the weather barrier apparatus 132, the vehicle forces a lower corner point 138 of an example upper seal member 140 back into and/or toward the opening 136 while the cover 134 resiliently expands into the opening 136, as shown in Figure 25. The cover 134 remains expanded into the opening 136 as the vehicle (e.g., fully) deflects the side seal member 142 and forces the weather barrier apparatus 132 to the activated configuration (similar to Fig. 39).

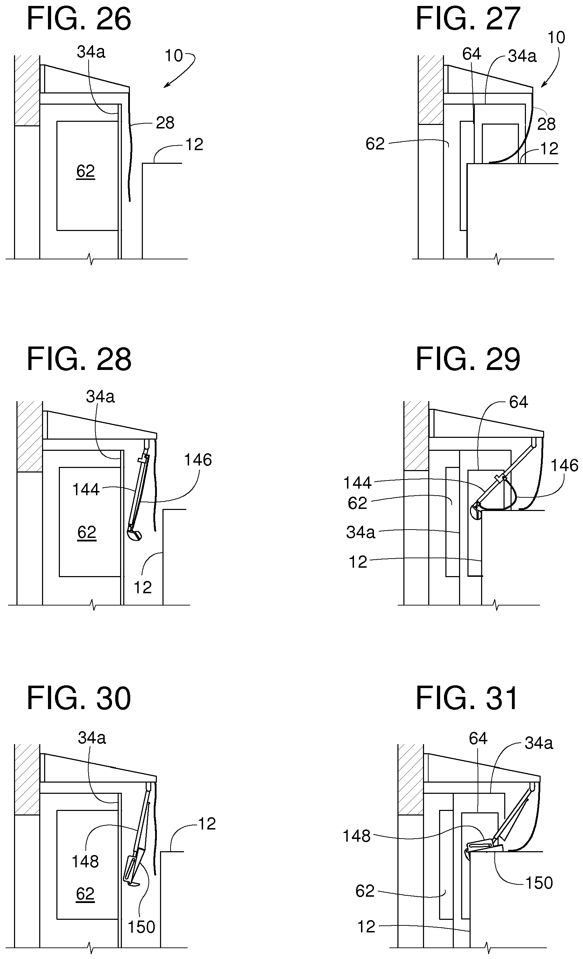

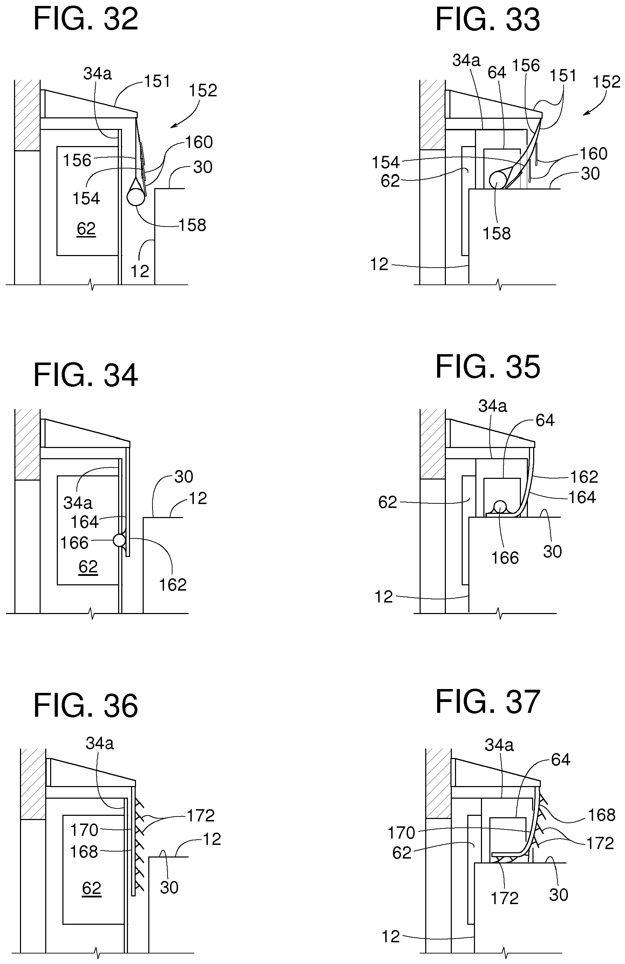

Figures 26 - 39 show various example header structures with upper seal members each having a lower sealing edge with a lowermost corner that can pass through the opening 64 and, if provided with a header-receiving chamber 62, can protrude into the chamber 62. Figures 26, 28, 30, 32, 34, 36 and 38 show the example weather barrier apparatuses in a relaxed configuration with the vehicle 12 approaching but still in a departed or non-engaged position. Figures 27, 29, 31, 33, 35, 37 and 39 show the example weather barrier apparatuses in an activated configuration with the vehicle 12 in a parked or engaged position. The example shown in Figures 26 and 27 is basically the same as the example shown in Figures 1 - 8. Figures 28 and 29 show an example upper seal member 144 with an expanding bulb seal 146. Figures 30 and 31 show an example upper seal member 148 with a compressible rear edge seal 150. Figures 32 and 33 show an example header structure 151 with an upper seal member 152 including a front sheet 154 and a back sheet 156. A cylinder 158 hanging from back sheet 156 seals down against the vehicle's roof 30. A plurality of seal segments 160 hanging from the front sheet 154 also seal against the roof 30, as shown in Figure 33. Figures 34 and 35 show an example upper seal member 162 including a resiliently compressible foam sheet 164 with an added weight 166 that helps push the foam sheet 164 tightly down against the vehicle's roof 30. Figures 36 and 37 show an example upper seal member 168 including a flexible sheet 170 (e.g., a fabric sheet or a resiliently compressible form sheet) with a plurality of pleats 172 that flex to seal against the vehicle's roof 30. Figures 38 and 39 show an example upper seal member 174 including a weighted cylinder 176 hanging from a flexible sheet 178. The weighted cylinder 176 seals down against the vehicle's roof 30, as shown in Figure 39.

Figures 40 - 49 show additional example weather barrier apparatus employing a header structure having an upper seal member extending into an opening of a side seal member. Figures 40 and 41, for instance, show an example weather barrier apparatus 180 including a side seal member 182 that has an opening 184 similar to the opening shown in Figure 11. However, an expandable cover 186 extends between a lower edge 188 of the opening 184 and the lower end of an upper seal member 198, where some examples of the upper seal member 198 include cylinder 158 and sheet 156. Examples of the expandable cover 186 include, but are not limited to, a bellows, elastic sheet of material, sheet wrapped about a spring loaded take-up roller, concertina sheet, folded sheet, corrugated sheet, etc. In this example, the cover 186 is normally open when the weather barrier apparatus 180 is in the relaxed configuration shown in Figure 40. As the vehicle 12 backs into the weather barrier apparatus 180, the side seal member 182 deflects to seal against the vehicle's side panel 36 (Fig. 1), and the vehicle 12 forces the cylinder 158 of an example upper seal member 198 up on top of the vehicle's roof 30, as shown in Figure 41. The cylinder 158 is longer than the vehicle's width, so the ends of the cylinder 158 protrude through the opening 184 (similar to Fig. 8). As the vehicle 12 forces the cylinder 158 on top of the roof 30, as shown in Figure 41, an elastic connection 189 (e.g., elastic cord, elastic fabric, etc.) pulls the upper end of the cover 186 up against the bottom of the cylinder 158. In some examples, the opening 184 has a pair of generally vertical tracks that guide the vertical movement of the cover 186.

An example weather barrier apparatus 190 shown in Figures 42 and 43 is similar to the example shown in Figures 40 and 41. However, the weather barrier apparatus 190 has a non-pleated or non-corrugated expandable cover 200 in the form of an elastic sheet that extends between a lower edge 194 of an opening 196 and the lower end of the upper seal member 198. As the vehicle 12 backs into the weather barrier apparatus 190, an example side seal member 192 deflects to seal against the vehicle's side panel 36 (Fig. 1), and the vehicle 12 forces the cylinder 158 up on top of the vehicle's roof 30. The cylinder 158 is longer than the vehicle's width, so the ends of the cylinder 158 protrude through the opening 196. As the vehicle 12 forces the cylinder 158 on top of the roof 30, as shown in Figure 43, the cylinder 158 pulls the cover 200 up across the opening 196 and up against the rear end of the vehicle 12.

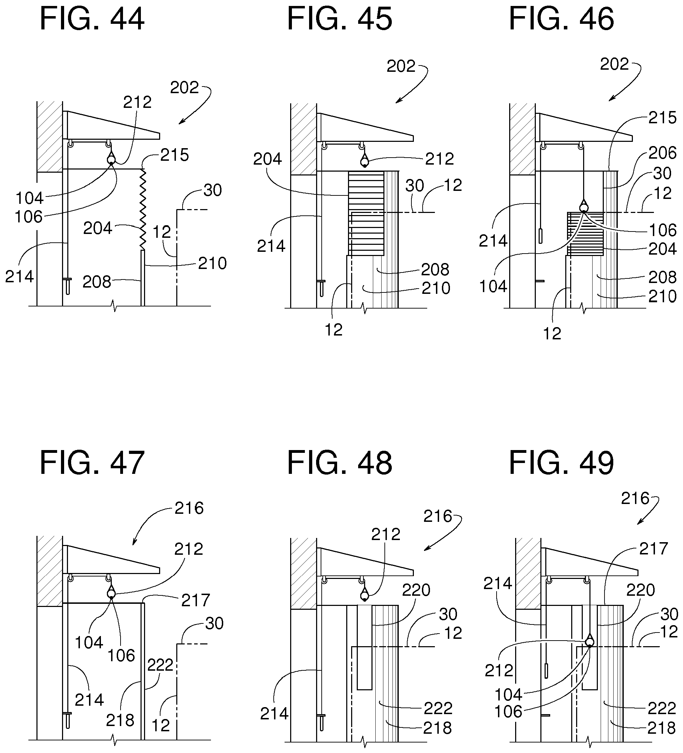

Figures 44 - 46 show an example the weather barrier apparatus 202 including a vertically expandable cover 204 extending across an opening 206 in a side seal member 208. The cover 204, the opening 206 and the side seal member 208 are similar respectively to the cover 186, the opening 184 and the side seal member 182 shown in Figures 40 and 41. However, the cover 204 is spring loaded or otherwise biased to the closed position shown in Figures 44 and 45. As the vehicle 12 backs into the weather barrier apparatus 202, as shown in Figure 45, the side seal member 208 deflects such that a front surface 210 of the side seal member 208 seals against the vehicle's side panel (e.g., side panel 36 in Fig. 1), as represented in Figure 45. To seal the vehicle's roof 30, an upper seal member 212 is subsequently lowered from the position shown in Figure 45 to that of Figure 46. This places the upper seal member 212 in sealing contact with the vehicle's roof 30 and also collapses the cover 204 to the position shown in Figure 46. In some examples, the upper seal member 212 is equal or comparable to the upper seal members shown in Figures 26, 27 and 38 - 39. The upper seal member 212 can be raised and lowered by any suitable means, examples of which include, but are not limited to, a manually operated cord 214 movable between a free position (Fig. 46) and an anchored position (Figs. 44 and 45), a winch, etc.

Figures 44 - 46 also show an endpoint 106 and an end view of the line segment 104 with respect to the upper seal member 212. When the weather barrier apparatus 202 is in the relaxed configuration, as shown in Figure 44, the endpoint 106 and the line segment 104 are above an uppermost edge 215 of the side seal member 208. When the weather barrier apparatus 202 is in the activated configuration, as shown in Figure 46, the line segment 104 lies atop of the roof 30 while the endpoint 106 is below the side seal member's uppermost edge 215. Also, when the weather barrier apparatus 202 is in the activated configuration, the front surface 210 faces away from the endpoint 106, just as Figure 8 shows the front surface 98 facing away from the endpoint 106.

Figures 47 - 49 show an example weather barrier apparatus 216 including a side seal member 218 with an opening 220 in the form of a slot. In response to the vehicle 12 backing into the weather barrier apparatus 216 from the position shown in Figure 47 to the position shown in Figure 48, the side seal member 218 deflects such that a front surface 222 of the side seal member 218 seals against the vehicle's side panel (e.g., side panel 36). To seal the vehicle's roof 30, the upper seal member 212 (which is longer than the vehicle's width) is subsequently lowered down through the opening 220 from the position shown in Figure 48 to that of Figure 49. This places the upper seal member 212 in sealing contact with the vehicle's roof 30. The upper seal member 212 can be raised and lowered by any suitable means, examples of which include, but are not limited to, manually operated cord 214 movable between a free position (Fig. 49) and an anchored position (Figs. 47 and 48), a winch, etc.

Figures 47 - 49 also show endpoint 106 and an end view of the line segment 104 with respect to the upper seal member 212. In some examples, when the weather barrier apparatus 216 is in the relaxed configuration, as shown in Figure 47, the endpoint 106 and the line segment 104 are above an uppermost edge 217 of the side seal member 218. When the weather barrier apparatus 216 is in the activated configuration, as shown in Figure 49, the line segment 104 lies atop of the roof 30 while the endpoint 106 is below the side seal member's uppermost edge 217. Also, when the weather barrier apparatus 216 is in the activated configuration, the front surface 222 faces away from the endpoint 106, just as Figure 8 shows the front surface 98 facing away from the endpoint 106.

In order to overcome the difficulty of sealing near the vehicle's upper rear corners 60 (Fig. 1), rear edge seals of some example side seal members have a hook profile. In some examples, a notch is strategically placed near the upper portion of the hook's core. The notch length and position covers the range of heights of the vehicle roofs expected to be encountered at the loading dock. A pliable cover wraps around the hook's core and connects to the side curtain. While the core of the hook has some flexibility for conforming to the contours of the rear edge of the vehicle, the more flexible pliable cover provides added sealing ability to the hook.

Figures 50 - 62 show example hook-style rear edge seals that can be used with various header structures and/or side structures including, but not limited to, the example header structures and side structures shown in Figures 1 - 49 and 63 - 66. Figures 50 - 56, for instance, show an example side seal member 224 with hook-style rear edge seal 68 being used with header structure 151 (Figs. 32 and 33) to provide an example weather barrier apparatus 226. Figures 50 and 52 show the weather barrier apparatus 226 in the relaxed configuration. Figures 51 and 53 show the weather barrier apparatus 226 in an activated configuration. Figure 54 is an exploded view showing an example core 82 about to be inserted within the cover 80. Figure 55 is an exploded view showing the seal core 82 about to be inserted within the seal cover 80 and the side support member 86 about to be attached to the side seal member 224. Figure 56 is a perspective view of the side seal member 224 attached to side support member 86.

As mentioned earlier, the hook profile allows the rear edge seal 68 to wrap around and seal against the vehicle's vertical rear edge 38a while, in some examples, the seal core 82 includes a notch or gap 84 that provides clearance for the vehicle's upper rear edge 32. The seal cover 80 spans the gap 84 and is sufficiently pliable to conform and seal around the vehicle's upper rear edge 32 in the area of the gap 84. A projection 228 at the very top of the hook is positioned above the top of the tallest anticipated vehicle, and the vehicle's upper rear edge 32 projects into the gap 84.

Although the actual construction, assembly and other design details may vary, in some examples, the hook's core 82 is made of a flexible material that is stiffer than the cover 80. Example materials of the seal core 82 include, but are not limited to, 1/16" - 1/8" thick UHMW (ultra high molecular weight polyethylene), other plastics, materials of other thicknesses, spring steel, and various combinations of materials. In some examples, as shown in Figure 54, the seal core 82 includes an upper section 230 and a lower section 232 that are an integral extension of each other, whereby the seal core 82 is a unitary piece, and the gap 84 is a notch at an interface 234 between sections 230 and 232. Example materials of the seal cover 80 include, but are not limited to, 22-once or 44-once vinyl coated fabric, nylon fabric, polyester fabric, non-fabric plastic sheeting, etc.

In some examples, the cover 80 wraps around the core 82 and extends across a plurality of flexible stays 236 to provide the side seal member 224 with the front panel 66 with the front surface 98 (Fig. 54). The stays 236 help support the more flexible cover 80 and provide the front panel 66 with resilience. Example materials of the stays 236 include, but are not limited to, fiberglass and spring steel.

To hold the core 82 within the cover 80, some examples of the side seal member 224 have a plurality of connecting tabs 238 and a mating connecting strip 240 that overlap to close the cover 80 and hold the core 82 in place. In some examples, the tabs 238 and the strip 240 are made of mating touch-and-hold fastener elements, such as VELCRO, which is a registered trademark of Velcro Industries, of Manchester, NH. Referring to Figure 55, to assemble the core 82 and the cover 80, the tabs 238 are positioned or inserted through a plurality of slots 242 in the core 82, as indicated by arrow 244, and the strip 240 folds over onto and connects to tabs 238, as indicated by arrows 246.

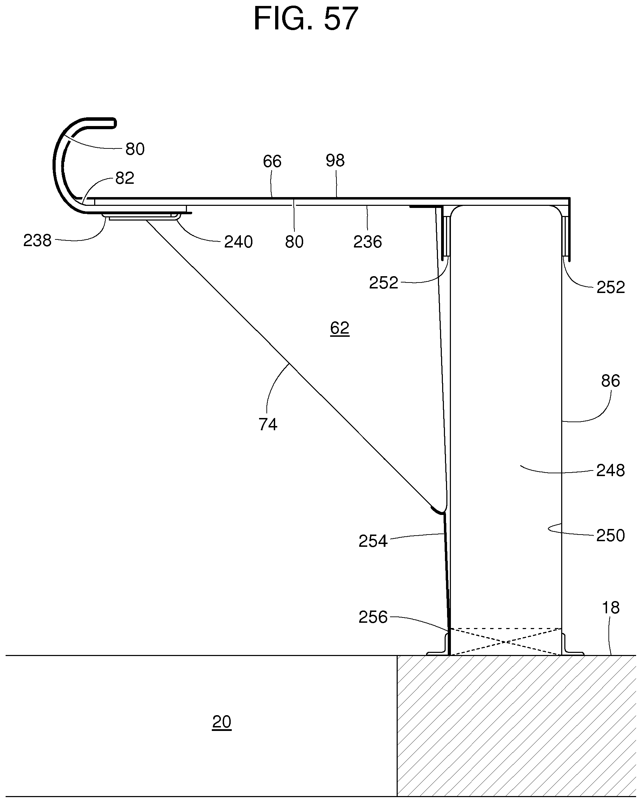

The side seal member 224 can be attached to any suitable side support member including, but not limited to, the side support member 86. In some examples, as shown in Figure 57, the side support member 86 includes a resiliently compressible foam core 248 (e.g., polyurethane foam) encased within a pliable cover 250 (e.g., 22-once or 44-once vinyl coated fabric, nylon fabric, polyester fabric, non-fabric plastic sheeting, etc.). Figures 50 - 53 and 57 show the side support member 86 attached to the wall 18. In some examples, touch-and-hold fasteners 252 connect the side seal member 224 to the side support member 86.

In the example shown in Figures 50 - 57, the weather barrier apparatus 226 includes optional back sheet 74 for enclosing the header-receiving chamber 62. The back sheet 74 can be of any shape, size and material. Some example materials of the back sheet 74 include, but are not limited to, 22-once or 44-once vinyl coated fabric, nylon fabric, polyester fabric, non-fabric plastic sheeting, etc. The back sheet 74 can be attached and optionally supported by any suitable means. One example of such means includes, but is not limited to, a strap 254 (Figs. 7 and 57) connecting the back sheet 74 to some convenient point 256 on the cover 250 and/or on the wall 18. In some examples, the strap 254 is omitted and portions of the back sheet 74 are left generally unsupported. In some examples, the back sheet 74 is supported by the header structure 151. In some examples the back sheet 74 is attached directly to the cover 250. In some examples, a portion of the cover 250 serves as part of the back sheet 74, whereby that portion of the cover 250 helps enclose the chamber 62.

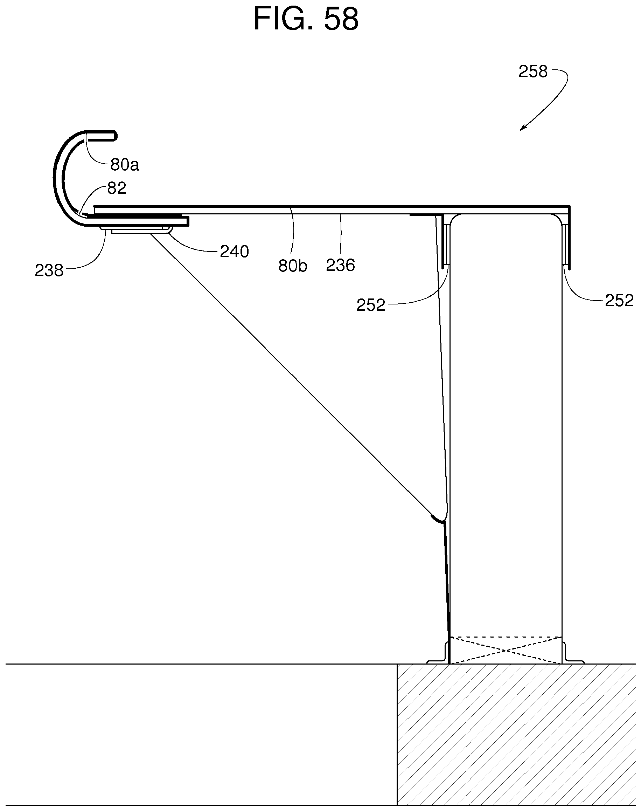

As an alternative to the cover 80 being a single sheet covering both the core 82 and the rest of the side seal member 224. Figure 58 shows an example weather barrier apparatus 258 including a first cover 80a encasing the core 82 and a second cover 80b overlying the stays 236. Tabs 238 and strip 240 hold the core 82 and the first cover 80a to the stays 236 and the second cover 80b. This allows future replacement of the core 82 and the first cover 80a without having to replace the second cover 80b. Also, the second cover 80b can be replaced without having to replace the first cover 80a. In some examples, the weather barrier apparatus of Figure 57 is retrofitted to create the weather barrier apparatus 258 of Figure 58. In some examples, such a retrofit involves cutting the cover 80 to create the second cover 80b and adding a new first cover 80a.

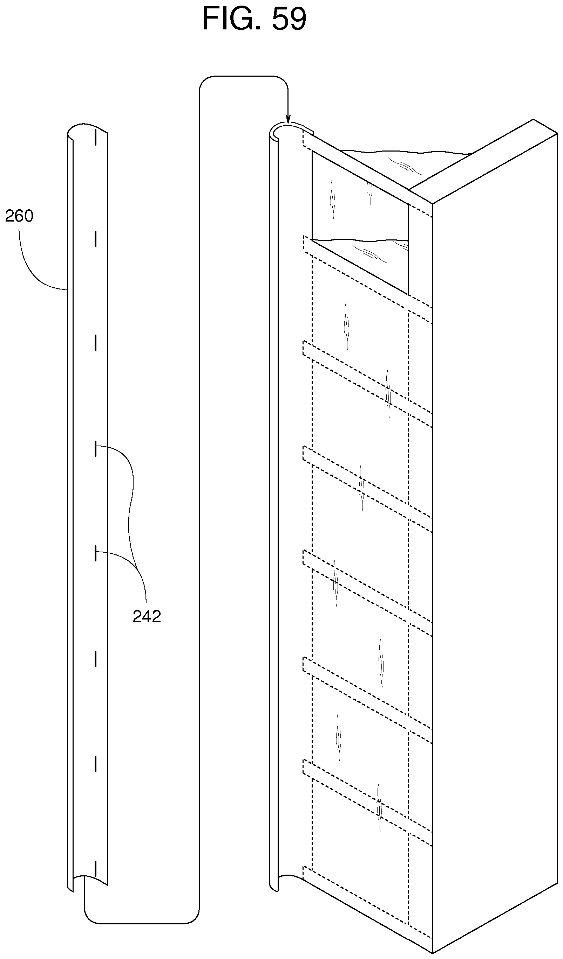

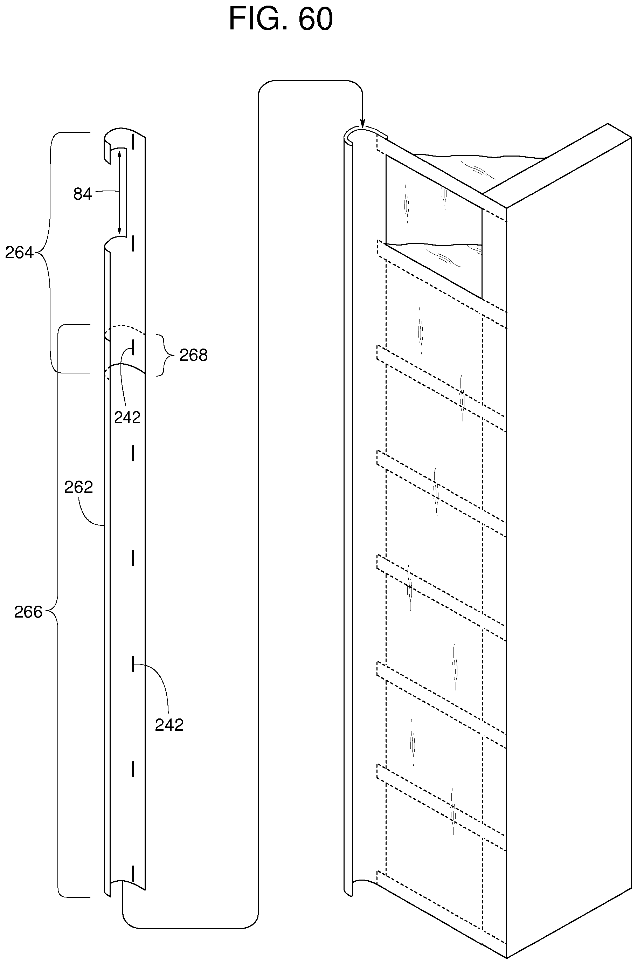

Figures 59 - 62 show examples of alternate rear edge seal cores. Figure 59 shows an example core 260 without the gap 84. In some examples, instead of fabricating and stocking various length full height hook cores with an accompanying notch in both left and right hand versions, more economical hook cores include an assembly of upper and lower sections. The lower section, in some examples, is of a standard size and can be used in both left and right applications. The upper section, in some examples, includes the notch or gap 84 and is right/left hand specific. To minimize the number of different parts needed to be stocked, the upper and lower sections, in some examples, are overlapped to various degrees and joined to make various lengths. In some examples, both upper and lower ends of a hook core have a notch or gap that makes the hook core reversible for both left and right hand versions. Figure 60, for example, shows a hook core 262 including an upper section 264 fitted to a lower section 266, with some overlap 268 where sections 264 and 266 come together. The upper section 264 includes a gap 84 while the lower section 266 can be cut to any desired length. As shown in the illustrated example of Figure 60, corresponding slots 242 in each of the sections 264, 266 are aligned within the area of the overlap 268 to facilitate assembly of the example side structure.

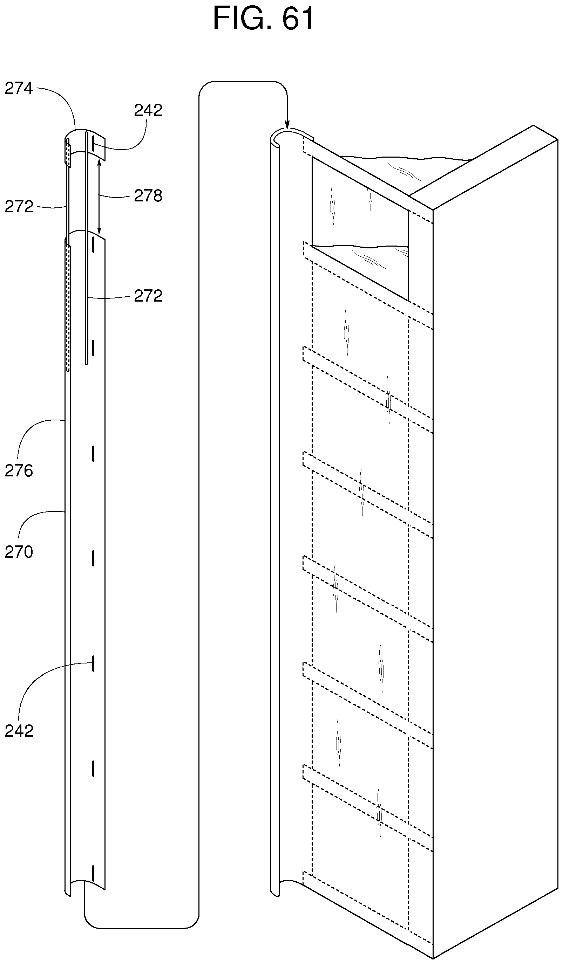

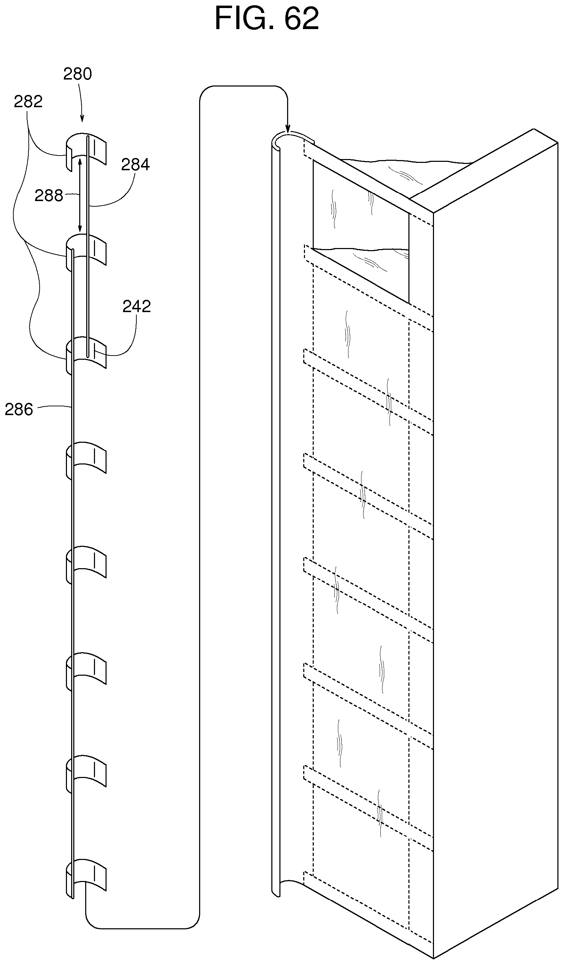

Figure 61 shows an example core 270 including one or more connectors 272 that connect an upper section 274 to a lower section 276. The sections 274 and 276 are spaced apart to create a gap 278 between them. The connectors 272 can be of any suitable quantity (e.g., one, two or more), any suitable profile (e.g., round, flat, rectangular, tubular, channel, etc.) and any suitable material (e.g., fiberglass, steel, etc.). Figure 62 shows an example core 280 including a plurality of hook pieces 282 interconnected by one or more connectors, such as connectors 284 and 286. The upper two hook pieces 282 are spaced apart to create a gap 288 between them. The connectors 284 and 286 can be of any suitable quantity (e.g., one, two or more), any suitable profile (e.g., round, flat, rectangular, tubular, channel, etc.) and any suitable material (e.g., fiberglass, steel, etc.). In some examples, the length of the gaps 278, 288 in Figures 61 and 62 are such that the slots 242 align with the tabs 238 described above in connection with Figures 54 - 58.

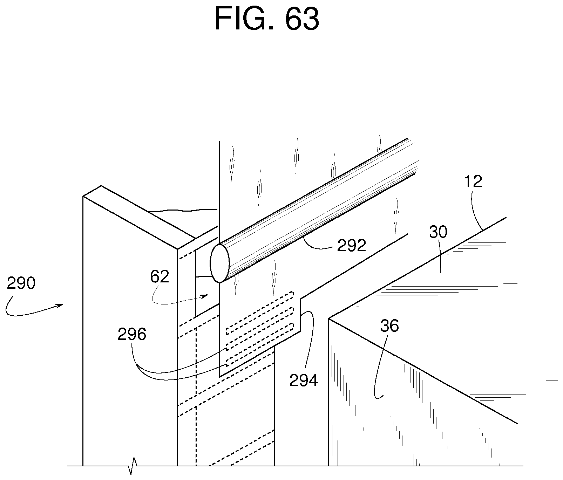

Figure 63 shows an example weather barrier apparatus 290having an example upper seal member 292 that includes a cover 294 with a series of stays or stiffeners 296 that help keep cover 294 stiff when seal member 292 is in the chamber 62 to cover the opening of the chamber.

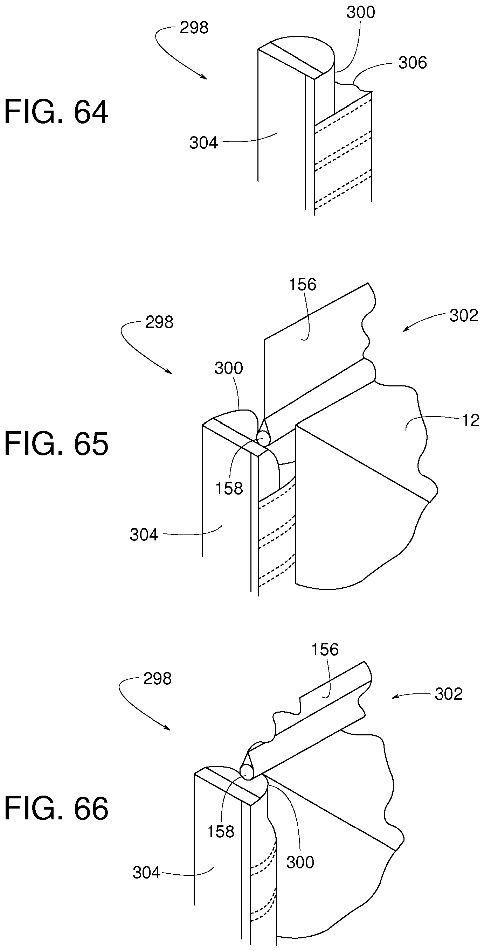

Figures 64 - 66 show an example weather barrier apparatus 298 with an example upper seal member 302 including the sheet 156 and the cylinder 158. The weather barrier apparatus 298 also includes an example side structure 304 with a deformable cover 300. In some examples, when the cover 300 is engaged by the upper seal member 302, the cover 300 deforms locally and allows room for the upper seal member 302. Some examples of the cover 300 have upper and/or lower endcaps to enclose it. Some examples of the cover 300 do not have endcaps. Some examples of the cover 300 create somewhat of a "bubble" that in some examples is filled with foam. Some examples of the cover 300 are hollow and biased to resist movement. Some examples have an extra sealing flap 306 that helps seal from underneath. Figure 65 shows the cover 300 moving out of the way as a lower portion of the upper seal member 302 (e.g., cylinder 158) penetrates the side structure 304. Figure 66 shows the cover 300 having moved forward after the lower portion of the upper seal member 302 further penetrates the side structure 304. Figure 66 also shows the cover 300 sealing sides of the vehicle 12 and underneath the upper seal member 302.

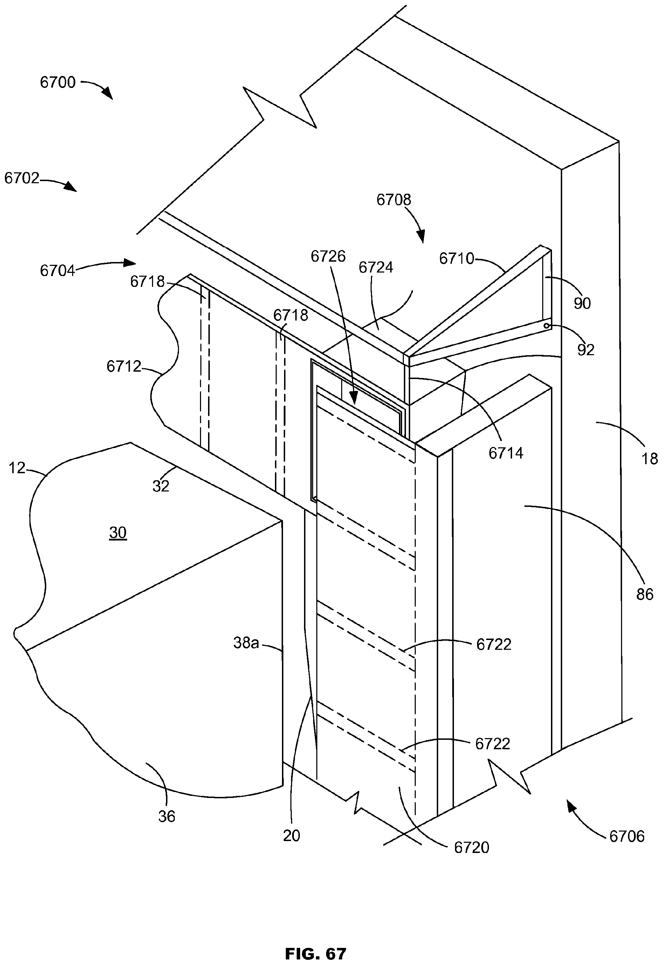

Figures 67-71 illustrate another example weather barrier apparatus 6700 disclosed herein. Those components of the example weather barrier apparatus 6700 that are substantially similar or identical to the components of the example weather barrier apparatus 10, 122, 132, 180, 190, 202, 216, 226, 258, 290, 298 described above in connection with of FIGS. 1-66 and that have functions substantially similar or identical to the functions of those components will not be described in detail again below. Instead, the interested reader is referred to the above corresponding descriptions. To facilitate this process, similar reference numbers will be used for like structures.

Figure 67 is a partial, perspective view of the example weather barrier apparatus 6700 shown in a relaxed or non-deflected condition 6702 (e.g., prior to being engaged by a vehicle 12). Referring to Figure 67, the weather barrier apparatus 6700 of the illustrated example includes a header structure 6704 (e.g., a generally horizontally elongate structure) proximate a first or top edge (e.g., a substantially horizontal edge parallel to the ground) of a doorway 20 and a side structure 6706 (e.g., a generally vertically elongate structure) proximate a second or side edge (e.g., a substantially vertical edge perpendicular to the ground) of the doorway 20. Only a first side 6708 (e.g., a right side or edge) of the header structure 6704 is shown in this example. However, a second side of the header structure 6704 opposite the first side 6708 is substantially similar or identical to the first side 6708. In addition, another side structure is positioned proximate the second side edge of the doorway 20 opposite the side structure 6706. The other side structure is not shown in this example, but is substantially identical to the side structure 6706. In some examples, the header structure 6704 is horizontally longer than a widest anticipated vehicle 12 and the side structure 6706 is taller than a highest anticipated vehicle 12.

The header structure 6704 of the illustrated example includes an upper support structure 6710 and an upper seal 6712 (e.g., a first seal or a second seal). The upper support structure 6710 of the illustrated example includes a frame 90 to attach the upper seal 6712 to a wall 18. In the illustrated example, the frame 90 is pivotal about a pin (e.g., the pin 92 of Fig. 3), which allows the frame 90 to tilt or deflect in an upward direction away from the vehicle 12 in reaction to an exceptionally high or tall vehicle backing into the weather barrier apparatus 6700. However, in some examples, the upper support structure 6710 is fixed (e.g., non-pivotal) relative to the wall 18. The upper seal 6712 is attached and/or suspended from the upper support structure 6710 via a mount or flexible member 6714 and is to engage and/or seal against a roof 30 and/or an upper rear edge 32 of the vehicle 12. In this example, the upper seal 6712 includes a plurality of stiffeners or stays 6718 (e.g., flexible stays 236) to help support and/or maintain a shape of the upper seal 6712 and/or provide upper seal 6712 with resilience. Further, the upper seal 6712 of the illustrated example may be formed and/or composed of a material substantially similar the upper seals 28, 126, 140, 144, 148, 152,162, 168, 174, 198, 212, 312 of Figures 1-66.

The side structure 6706 of the illustrated example includes a side seal 6720 (e.g., a first seal or a second seal) attached to a side support frame 86, which mounts or attaches the side seal 6720 to the wall 18. The side seal 6720 is a flexible and/or resilient member such that at least a portion of the side seal 6720 can flex or bend relative to the side support frame 86 (e.g., when the side seal 6720 is engaged by the vehicle 12). When engaged with the vehicle 12, the side seal 6720 seals against a side panel 36 and/or against a vertical rear edge 38a of the vehicle 12. The side support frame 86 of the illustrated example is composed of a resiliently compressible polyurethane foam core encased within a pliable or flexible sheet of material. In this example, the side seal 6720 includes a plurality of stiffeners or stays 6722 (e.g., flexible stays 236) to help support and/or maintain a shape of the side seal 6720 and/or provide side seal 6720 with resilience. In some examples, the side seal 6720 may include a core 82 having a hook-style member similar to the example side seal 224 of Figures 55 and 56 and/or may configured similar to the example side seals of the example weather barrier apparatus 10, 122, 132, 180, 190, 202, 216, 226, 258, 290, 298 of FIGS. 1-66. Further, the side seal 6720 of the illustrated example may be formed and/or composed a material substantially similar the side seals 34a, 34b, 130, 142, 182, 192, 208, 218, and/or 224 of Figures 1-66.

Additionally, unlike the example weather barrier apparatus 10, 122, 132, 180, 190, 202, 216, 226, 258, 290, 298 of FIGS. 1-66, the header structure 6704 of the illustrated example includes a clearance feature 6724 to provide clearance at an interface 6726 between the header structure 6704 and the side structure 6706. Specifically, the interface 6726 of the illustrated example is provided at a portion or location where the side seal 6720 overlaps the upper seal 6712.

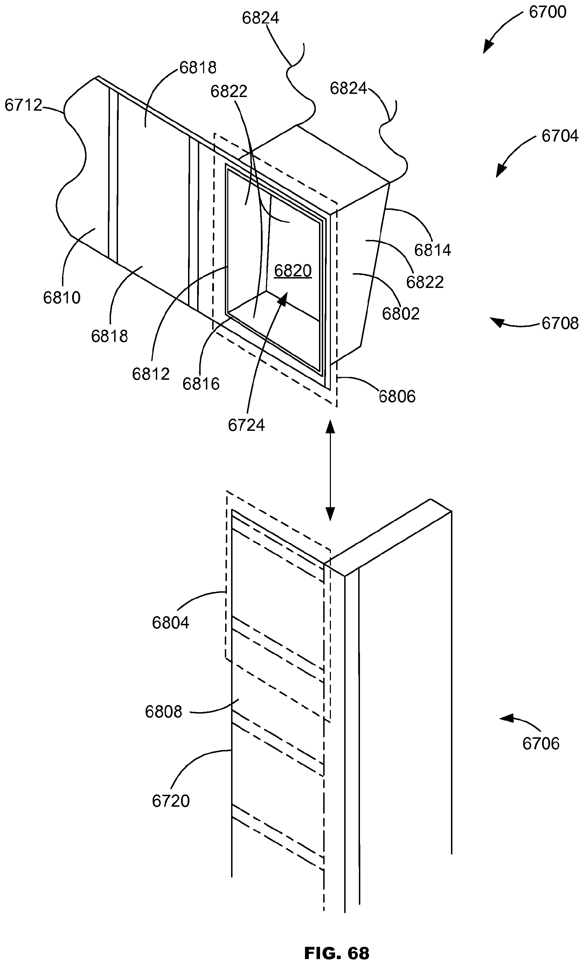

Figure 68 is a partial, exploded view of the weather barrier apparatus 6700 according to an embodiment of the invention. The clearance feature 6724 according to the invention includes a side-seal structure receiving chamber or pocket 6802 formed, attached, and/or mounted to the header structure 6704 (Fig. 67). The pocket 6802 is positioned adjacent the first side 6708 of the header structure 6704. Although not shown, the second side of the header structure 6704 and/or the upper seal 6712 opposite the first side 6708 also includes the pocket 6802. However, in some embodiments, the pocket 6802 is only positioned on the first side 6708 of the header structure 6704 and/or upper seal 6712. The side-seal receiving chamber or pocket 6802 or allows the side structure 6706 to rotate, flex or bend towards the wall 18 (e.g., backwards) without interference from the upper seal 6712. To this end, unlike the weather barrier apparatus of Figures 1-66, at least a portion 6804 (e.g., a penetration portion) of the side structure 6706 and/or the side seal 6720 overlaps at least a portion 6806 of the header structure 6704 and/or the upper seal 6712. In other words, at least a portion of the header structure 6704 and/or the upper seal 6712 is positioned behind a front face or vehicle-engaging portion 6808 of the side seal 6720 and/or the side structure 6706. Thus, the header structure 6704 is positioned between side seal 6720 and the wall 18.

The upper seal 6712 includes a face panel or flexible curtain 6810. The face panel 6810 includes an opening 6812 in communication with the pocket 6802. In the illustrated embodiment, the pocket 6802 includes a frame 6814 positioned between the upper seal 6712 and/or the face panel 6810 and the wall 18. The frame 6814 may be composed of foam, fabric, one or more sheets, plastic, metal (e.g., sheet metal), stays or posts covered by fabric, and/or any other suitable material(s). The pocket 6802 and/or the frame 6814 can be any shape, examples of which include, but are not limited to, triangular, rectangular, partially spherical, partially cylindrical, irregular, and/or any other suitable shape.

The frame 6814 of the illustrated embodiment includes a flange 6816 to engage a front surface or vehicle-engaging surface 6818 of the face panel 6810 to facilitate attachment and/or help secure the frame 6814 to the face panel 6810. The frame 6814 defines a cavity 6820 in communication with the opening 6812. The cavity 6820 is enclosed by walls 6822 to prevent air from flowing through the opening 6812 of the face panel 6810 and bypassing the header structure 6704 and/or the side member 6706. The pocket 6802 of the illustrated embodiment includes one or more attachment members 6824 to attach and/or couple to the wall 18, the header structure 6704 and/or the side structure 6706. The attachment members 6824 hold the pocket 6802 in position relative to the wall 18, the header structure 6704 and/or the side structure 6706 when the header structure 6704 is mounted to the wall 18 or at a loading dock. The attachment members 6824 include elastic cords, strings, Velcro, brackets, and/or any other fastener(s).

In some examples which are not part of the invention, the pocket 6802 is not enclosed and at least the portion 6804 of the side member 6720 penetrates through the header structure 6704 and/or the upper seal 6712 via the opening 6812 of the face panel 6810. In some examples, a cover may extend across (e.g., partially across) the opening 6812 to obstruct the opening. The cover may include, for example, the cover 110 of Figures 11 and 12, the cover 112 of Figures 14 and 15, the cover 114 of Figures 16 and 17, the cover 118 of Figures 18 and 19, the cover 120 of Figures 20 and 21, the cover 124 of Figures 22 and 23, the cover 134 of Figures 24 and 25, the cover 186 of Figures 40 and 41, the cover 200 of Figures 42 and 43, the cover 204 of Figures 44-46, the cover 294 of Figure 63, the cover 300 of Figures 64-66, and/or any other cover to allow the side seal to extend into the pocket through the opening when the side seal is deflected by the vehicle 12.

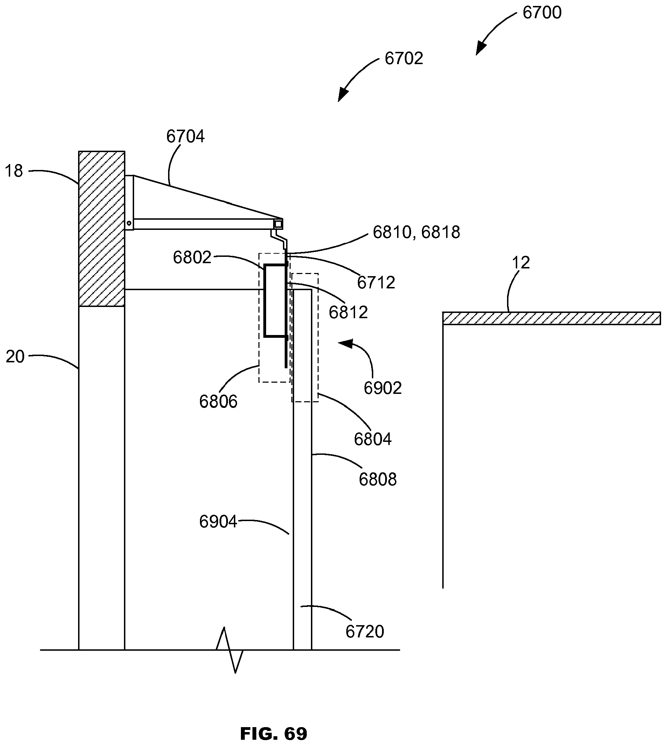

Figure 69 is a cross-sectional side view of the weather barrier apparatus 6700 of Figures 67 and 68. In the embodiments shown in Figures 67-69, the weather barrier apparatus 6700 is in the relaxed or non-engaged position 6702. In the relaxed position 6702, at least the portion 6804 of the side seal 6720 of the illustrated embodiment overlaps and/or extends across at least the portion 6806 of the upper seal 6712 such that the side seal 6720 extends across and/or is positioned in front of the opening 6812 of the face panel 6810 when the header structure 6704 of the illustrated embodiment is coupled to the side structure 6706. Thus, the side seal 6720 covers or partial covers the opening 6812 of the face panel 6810 when the side seal 6720 is in a non-deflected position 6902 (e.g., when not in engagement with the vehicle 12). When the weather barrier apparatus 6700 is in the relaxed configuration 6702, the front surface or vehicle engaging surface 6808 of the side seal 6720 and/or the front surface or the vehicle engaging surface 6818 faces generally in a forward direction away from the doorway 20 and/or the wall 18. In the illustrated embodiment, a rear surface 6904 (e.g., a first surface) of the side seal 6720 opposite the front surface 6808 (e.g., a second surface) is in contact or engagement with the front surface 6818 of the upper seal 6712 when the weather barrier apparatus 6700 is in the non-deflected condition 6702. However, in other embodiments, the rear surface 6904 of the side seal 6720 may be spaced away (e.g., disengaged) from the front surface 6818 of the upper seal 6712 when the weather barrier apparatus 6700 is in the non-deflected condition 6702.

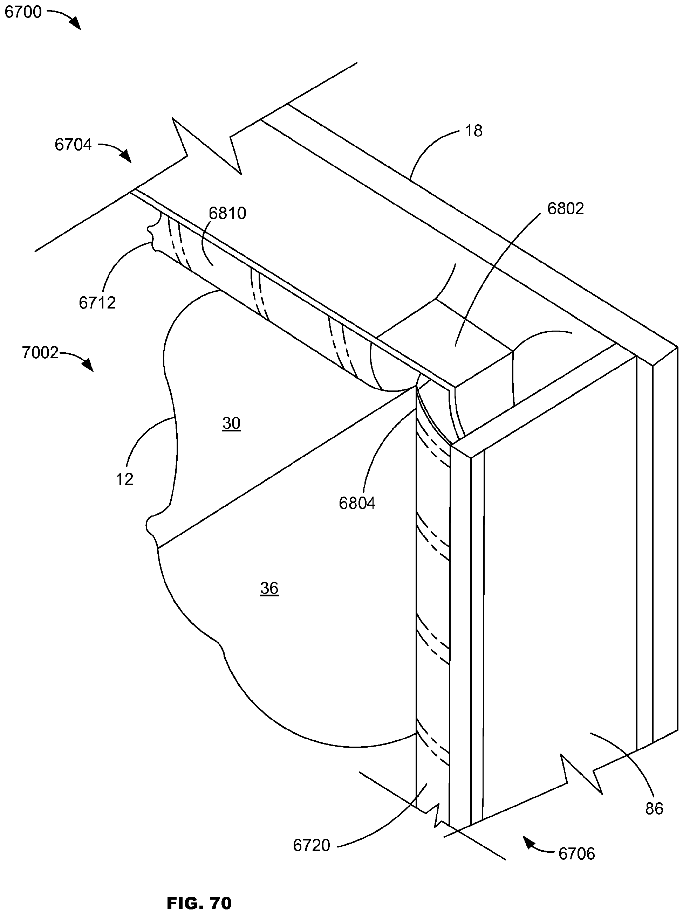

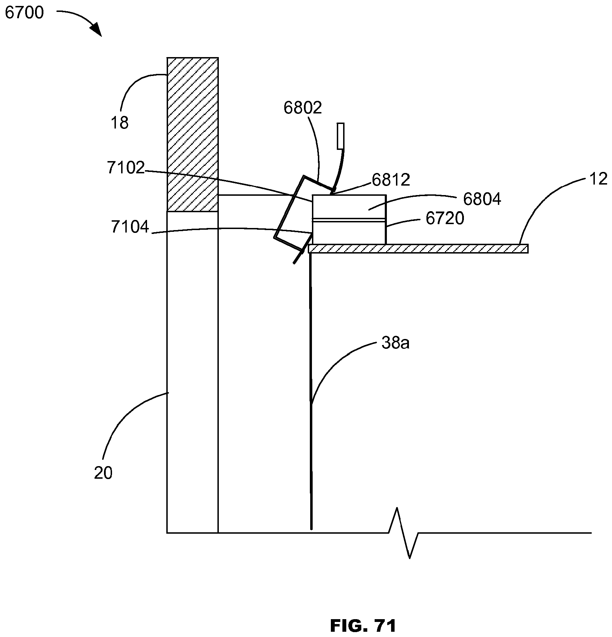

Figure 70 is a partial, perspective view of the weather barrier apparatus 6700 shown in a deflected or activated condition 7002 (e.g., being deflected and/or engaged by the vehicle 12). Referring to Figures 70, as the vehicle 12 backs into and engages and/or deflects the header structure 6704, the vehicle causes the weather barrier apparatus 6700 to move from the relaxed condition 6702 to the activated condition 7002. In the activated condition 7002 as shown, for example, in Figures 70, at least the portion (e.g., the portion 6804) of the side seal 6720 curves and/or bends toward the doorway 20 and/or the wall 18 to engage and/or seal against the side surface 36 and/or the vertical rear edge 38a of the vehicle 12. Likewise, the upper seal 6712 deflects and/or curves to engage and/or seal against the roof 30 and/or against the upper rear edge 32 of the vehicle 12 when the vehicle 12 engages the weather barrier apparatus 6700. Figure 71 is a cross-sectional side view of the weather barrier apparatus 6700 in the activated condition 7002 of Figure 70. Referring to Figures 70 and 71, when the side seal 6720 of the illustrated embodiment is deflected, the opening 6812 in the face panel 6810 allows, for example, the penetrating portion 6804 of the of the side seal 6720 to pass through or penetrate the front surface 6818, the face panel 6810 and/or the upper seal 6712 of the header structure 6704 rather than displace the face panel 6810 and/or the upper seal 6712 adversely (e.g., cause the face panel 6810 and/or the upper seal 6712 to move away from the rear upper edge 32 of the vehicle 12). As shown in Figure 71, the side seal 6720 flexes or bends toward the wall 18 to cause at least the penetrating portion 6804 to flex or move in the pocket 6802 through the opening 6812 formed in the face panel 6810 when the side seal 6720 is deflected by the vehicle 12. More specifically, at least a corner portion 7102 (Fig. 71) of the side seal 6720 is deflected in the pocket 6802. The pocket 6802 and/or the frame 6814 of the illustrated example is compressible to facilitate the side seal 6720 to protrude into the opening 6812 and the pocket 6802 as the side seal 6720 deflects to place the front surface 6808 in sealing contact with the vehicle 12.

In some embodiments, the penetrating portion 6804 of the side seal 6720 includes, but is not limited to, a lateral edge 7104 of the side seal 6720, the corner portion 7102 (e.g., corner point) of the side seal 6720, etc. In some embodiments, the penetrating portion 6804 may be offset and/or detached from a remaining body portion of the side seal 6720 such that the penetrating portion 6804 may flex substantially independently from the remaining body portion of the side seal 6720. For example, the penetration portion 6804 may flex or move relative to the remaining body portion of the side seal 6720 via a slit, slot, cut and/or other detachment means (e.g., a horizontal slit extending between a first side edge of the side seal 6720 and a second side edge of the side seal 6720).

In some embodiments, the side seal 6720 of the illustrated example of Figures 67-71 may include a hook-shaped seal end such as, for example, the hook-shaped seals 82, 262, 270, 280, and/or another type of hook-shaped structure to engage the vertical side edge 38a of the vehicle 12. At least a portion of the hook-shaped structure portions may be received by the pocket 6802 when the side seal 6720 is deflected by the vehicle 12. Additionally or alternatively, the upper seal 6712 and/or the face panel 6810 may include a rear seal (e.g., a hook-style edge) such as, for example, the rear edge seal 68 and/or any other hook-style edge to engage the upper rear edge 32 of the vehicle 12.

In some examples, the example header structures of the example weather barrier apparatus 10, 122, 132, 180, 190, 202, 216, 226, 258, 290, 298 of FIGS. 1-66 may be configured with the opening 6812 and/or the pocket 6802 disclosed in Figures 67-71 instead of the respective pockets 62, the openings 64, 108, 136, 184, 196, 206, 220 and/or any other opening or cavity provided in the example side seal members 34a, 34b, 130, 142, 182, 192, 208, 218 and 224. In some such examples, at least portions of the side seal members 34a, 34b, 130, 142, 182, 192, 208, 218 and 224 and/or the upper sealing members 28, 126, 140, 144, 148, 152, 162, 166, 168, 174, 198, 212, and 302 of the example weather barrier apparatus 10, 122, 132, 180, 190, 202, 216, 226, 258, 290, 298 of FIGS. 1-66 may be received within the pocket 6802 and/or the opening 6812 of the example header structures. In some examples, the upper seal member 6712 may be, for example, the upper seal members 28, 126, 140, 144, 148, 152, 162, 166, 168, 174, 198, 212 and 302 that include, for example, a flexible curtain, cylinder, a weight, a seal, and/or any other seal that is suspended from the upper support member 6710.

Additionally or alternatively, the header structure 6704 may be, for example, the header structure 24, 146, 151. In some examples, the weather barrier apparatus 6700 may be implemented with a second upper seal member (e.g., the upper sealing members 28, 126, 140, 144, 148, 152, 162, 166, 168, 174, 198, 212, and 302) suspended from the upper support member 6710 and may hang in front of the upper seal 6712 and/or the side seal 6720 such that the second upper seal engages the roof 30 and/or the upper rear edge 32 of the vehicle 12. In some such examples, the upper seal 6712 and the second upper seal may be positioned between the wall 18 and the side seal 6720. Alternatively, the side seal 6720 may be positioned between the upper seal 6712 and the second upper seal. When in the deflected position, at least portions of the second upper seal and/or the side seal 6720 move in the pocket 6802. Alternatively, in some such examples having the upper seal 6712 and a second upper seal, the side seal 6720 may also include an opening (e.g., similar to the opening 64 of the side seal 34a). To this end, the opening (e.g., the opening 64) of the side seal 6720 receives a portion of the second upper seal (e.g., the flexible curtain of the upper seal 28) and the opening 6812 of the upper seal 6712 receives the penetrating portion 6804 of the side seal 6720 and/or at least portion of the second upper seal.

## Claims

1. A weather barrier apparatus (6700) comprising:
a first seal (6720) mountable at a loading dock (14) and engageable by a vehicle (12) when the vehicle (12) moves between a departed position and a parked position relative to the first seal (6720), the first seal (6720) having a penetration portion (6804) movable between a relaxed condition (6702) when the vehicle (12) releases the first seal (6720) and an activated condition (7002) when the vehicle (12) engages the first seal (6720); and
a second seal (6712) to be coupled adjacent the first seal (6720);
wherein the first seal (6720) comprises a side seal (6720) and the second seal (6712) comprises a header structure (6704); and a pocket (6802);
**characterized by**:
the header structure (6704) comprises said pocket (6802) having an opening (6812) positioned at an interface (6726) between the first seal (6720) and the second seal (6712), wherein the opening (6812) leads to a cavity (6820) defined by the pocket (6802), the pocket (6802) being adjacent the penetration portion (6804) of the first seal (6720) such that at least the penetration portion (6804) extends across at least a portion of the opening (6812) when the first seal (6720) is in the relaxed condition (6702), and the opening (6812) of the second seal (6712) is to receive at least the penetration portion (6804) of the first seal (6720) when the first seal (6720) is in the activated condition (7002).

2. The weather barrier apparatus (6700) of claim 1, wherein the first seal (6720) is positioned adjacent a first edge of a doorway (20) and the second seal (6712) is positioned adjacent a second edge of the doorway (20), wherein the first edge is non-parallel relative to the second edge.

3. The weather barrier apparatus (6700) of claim 2, further comprising a cover (110, 112, 114, 118, 120, 124, 134, 186, 200, 204, 294, 300) to extend across and obstruct the opening (6812) when the weather barrier apparatus (6700) is in the relaxed condition 6702), the cover (110, 112, 114, 118, 120, 124, 134, 186, 200, 204, 294, 300) being movable within the opening (6812) when the penetration portion (6804) is deflected towards the opening (6812).

4. The weather barrier apparatus (6700) of claim 1, wherein the first seal (6720) engages a vertical side edge (38a) of the vehicle (12) and the second seal (6712) engages an upper rear edge (32) of the vehicle (12) when the weather barrier apparatus (6700) is in the activated condition (7002).

5. The weather barrier apparatus (6700) of claim 1, wherein the second seal (6712) is to be positioned between the first seal (6720) and a wall (18) of a loading dock (14).

6. The weather barrier apparatus (6700) of claim 1, wherein the header structure (6704) is attachable to a wall (18) proximate a doorway (20), the header structure (6704) to engage at least one of a roof (30) and an upper rear edge (32) of the vehicle (12) when the weather barrier apparatus (6700) is to be engaged by the vehicle (12);
the pocket (6802) positioned adjacent a first lateral edge of the header structure (6704);
a side support member (86) attachable to the wall (18) proximate the doorway (20); and the side seal (6720) extending from the side support member (86), the side seal (6720) having a front surface facing away from the doorway (20) when the side seal (6720) is in the relaxed condition (6702) when the vehicle is positioned away from the weather barrier apparatus (6700).

7. The weather barrier apparatus (6700) of claim 6, wherein the header structure (6704) comprises a face panel (6810), the face panel (6810) to face in a direction away from the doorway (20) when the header structure (6704) is mounted to the wall (18), the face panel (6810) having the opening (6812) leading to the pocket (6802).

8. The weather barrier apparatus (6700) of claim 6, wherein the pocket (6802) is to receive a portion of the vehicle (12) when the vehicle (12) engages the side seal (6720) and deflects the side seal (6720) within the pocket (6802).

9. The weather barrier apparatus (6700) of claim 6, wherein the pocket (6802) comprises a frame (6814) having walls (6822) that define the pocket (6802), the walls (6822) to prevent airflow through the pocket (6802).

10. A weather barrier apparatus (10) for a loading dock (14), the weather barrier apparatus (10) having a deflected position when engaged by a rear edge of a vehicle (12) and a non-deflected position when spaced apart from the rear edge of the vehicle (12), comprising:
a side support member (86) attachable to a wall (18) proximate a doorway (20) of the loading dock (14);
a side seal (34a) to extend farther from the side support member (86) toward a center of the doorway (20) when the weather barrier apparatus (10) is in the non-deflected position than when the weather barrier apparatus (10) is in the deflected position; and
an upper seal (28) attachable to the wall (18) and positioned adjacent the side support member (86) such that a first portion of the upper seal (28) and a second portion of the side seal overlap to define an interface ; wherein the side seal (34a) includes a pocket (62);
**characterized by**:
the side seal (34a) including said pocket (62) with an opening (64) adjacent the interface, the opening (64) in the side seal (34a) to receive at least a portion of the upper seal (28) when the weather barrier apparatus (10) is in the deflected position.

11. The weather barrier apparatus (10) of claim 10, wherein the side seal (34a) is positioned between the upper seal (28) and said wall (18) of the loading dock (14).

## Patentansprüche

1. Wetterbarrierevorrichtung (6700) umfassend:
eine erste Dichtung (6720), die an einer Laderampe (14) anbringbar ist und mit einem Fahrzeug (12) in Eingriff bringbar ist, wenn sich das Fahrzeug (12) zwischen einer abgefahrenen Position und einer Parkposition relativ zu der ersten Dichtung (6720) bewegt, wobei die erste Dichtung (6720) einen Eindringabschnitt (6804) aufweist, der zwischen einem entspannten Zustand (6702), wenn das Fahrzeug (12) die erste Dichtung (6720) freigibt, und einem aktivierten Zustand (7002), wenn das Fahrzeug (12) mit der ersten Dichtung (6720) in Eingriff kommt, bewegbar ist; und
eine zweite Dichtung (6712), die neben der ersten Dichtung (6720) zu koppeln ist;
wobei die erste Dichtung (6720) eine Seitendichtung (6720) umfasst und die zweite Dichtung (6712) eine Kopfstruktur (6704) und eine Tasche (6802) umfasst;
**gekennzeichnet dadurch, dass**:
die Kopfstruktur (6704) die Tasche (6802) mit einer Öffnung (6812), die an einer Schnittstelle (6726) zwischen der ersten Dichtung (6720) und der zweiten Dichtung (6712) positioniert ist, umfasst, wobei die Öffnung (6812) zu einem Hohlraum (6820) führt, der durch die Tasche (6802) definiert ist, wobei die Tasche (6802) neben dem Eindringabschnitt (6804) der ersten Dichtung (6720) ist, so dass sich zumindest der Eindringabschnitt (6804) über zumindest einen Abschnitt der Öffnung (6812) erstreckt, wenn sich die erste Dichtung (6720) in dem entspannten Zustand (6702) befindet, und die Öffnung (6812) der zweiten Dichtung (6712) zumindest den Eindringabschnitt (6804) der ersten Dichtung (6720) aufnehmen soll, wenn sich die erste Dichtung (6720) in dem aktivierten Zustand (7002) befindet.

2. Wetterbarrierevorrichtung (6700) nach Anspruch 1, wobei die erste Dichtung (6720) neben einer ersten Kante einer Türöffnung (20) positioniert ist und die zweite Dichtung (6712) neben einer zweiten Kante der Türöffnung (20) positioniert ist, wobei die erste Kante in Bezug auf die zweite Kante nicht-parallel ist.

3. Wetterbarrierevorrichtung (6700) nach Anspruch 2, ferner umfassend eine Abdeckung (110, 112, 114, 118, 120, 124, 134, 186, 200, 204, 294, 300), die sich über die Öffnung (6812) erstreckt und diese versperrt, wenn sich die Wetterbarrierevorrichtung (6700) in dem entspannten Zustand 6702) befindet, wobei die Abdeckung (110, 112, 114, 118, 120, 124, 134, 186, 200, 204, 294, 300) innerhalb der Öffnung (6812) beweglich ist, wenn der Eindringabschnitt (6804) in Richtung der Öffnung (6812) abgelenkt wird.

4. Wetterbarrierevorrichtung (6700) nach Anspruch 1, wobei die erste Dichtung (6720) mit einer vertikalen Seitenkante (38a) des Fahrzeugs (12) in Eingriff steht und die zweite Dichtung (6712) mit einer oberen Hinterkante (32) des Fahrzeugs (12) in Eingriff steht, wenn sich die Wetterbarrierevorrichtung (6700) im aktivierten Zustand (7002) befindet.

5. Wetterbarrierevorrichtung (6700) nach Anspruch 1, wobei die zweite Dichtung (6712) zwischen der ersten Dichtung (6720) und einer Wand (18) einer Laderampe (14) zu positionieren ist.

6. Wetterbarrierevorrichtung (6700) nach Anspruch 1, wobei die Kopfstruktur (6704) an einer Wand (18) in der Nähe einer Türöffnung (20) anbringbar ist, wobei die Kopfstruktur (6704) mit einem Dach (30) und/oder einer oberen Hinterkante (32) des Fahrzeugs (12) in Eingriff bringbar ist, wenn die Wetterbarrierevorrichtung (6700) mit dem Fahrzeug (12) in Eingriff gebracht werden soll;
wobei die Tasche (6802) neben einer ersten Seitenkante der Kopfstruktur (6704) positioniert ist;
wobei ein seitliches Stützelement (86) in der Nähe der Türöffnung (20) an der Wand (18) anbringbar ist; und
wobei sich die Seitendichtung (6720) von dem seitlichen Stützelement (86) erstreckt, wobei die Seitendichtung (6720) eine Vorderfläche aufweist, die von der Türöffnung (20) weg weist, wenn sich die Seitendichtung (6720) in dem entspannten Zustand (6702) befindet, wenn das Fahrzeug von der Wetterbarrierevorrichtung (6700) weg positioniert ist.

7. Wetterbarrierevorrichtung (6700) nach Anspruch 6, wobei die Kopfstruktur (6704) eine Frontplatte (6810) umfasst, wobei die Frontplatte (6810) in eine Richtung weg von der Türöffnung (20) weist, wenn die Kopfstruktur (6704) an der Wand (18) montiert ist, wobei die Frontplatte (6810) die Öffnung (6812) aufweist, die zu der Tasche (6802) führt.

8. Wetterbarrierevorrichtung (6700) nach Anspruch 6, wobei die Tasche (6802) einen Teil des Fahrzeugs (12) aufnehmen soll, wenn das Fahrzeug (12) mit der Seitendichtung (6720) in Eingriff kommt und die Seitendichtung (6720) innerhalb der Tasche (6802) auslenkt.

9. Wetterbarrierevorrichtung (6700) nach Anspruch 6, wobei die Tasche (6802) einen Rahmen (6814) mit Wänden (6822) aufweist, die die Tasche (6802) definieren, wobei die Wände (6822) einen Luftstrom durch die Tasche (6802) verhindern.

10. Wetterbarrierevorrichtung (10) für eine Laderampe (14), wobei die Wetterbarrierevorrichtung (10) eine ausgelenkte Position aufweist, wenn sie mit einer Hinterkante eines Fahrzeugs (12) in Eingriff steht, und eine nicht ausgelenkte Position, wenn sie von der Hinterkante des Fahrzeugs (12) beabstandet ist, umfassend:
ein seitliches Stützelement (86), das an einer Wand (18) in der Nähe einer Türöffnung (20) der Laderampe (14) befestigt werden kann;
eine Seitendichtung (34a), die sich weiter von dem seitlichen Stützelement (86) in Richtung eines Zentrums der Türöffnung (20) erstreckt, wenn sich die Wetterbarrierevorrichtung (10) in der nicht ausgelenkten Position befindet, als wenn sich die Wetterbarrierevorrichtung (10) in der ausgelenkten Position befindet; und
eine obere Dichtung (28), die an der Wand (18) anbringbar ist und angrenzend an das seitliche Stützelement (86) so positioniert ist, dass ein erster Abschnitt der oberen Dichtung (28) und ein zweiter Abschnitt der Seitendichtung überlappen, um eine Schnittstelle zu definieren;
wobei die Seitendichtung (34a) eine Tasche (62) aufweist
**gekennzeichnet dadurch, dass**:
die Seitendichtung (34a) die Tasche (62) mit einer Öffnung (64) angrenzend an die Schnittstelle aufweist, wobei die Öffnung (64) in der Seitendichtung (34a) mindestens einen Teil der oberen Dichtung (28) aufnimmt, wenn sich die Wetterbarrierevorrichtung (10) in der ausgelenkten Position befindet.

11. Wetterbarrierevorrichtung (10) nach Anspruch 10, wobei die erste Dichtung (34a) zwischen der oberen Dichtung (28) und der Wand (18) der Laderampe (14) angeordnet ist.

## Revendications

1. Appareil-barrière contre les intempéries (6700) comprenant :
un premier joint d'étanchéité (6720) pouvant être monté sur un quai de chargement (14) et pouvant se mettre en prise avec un véhicule (12) lorsque le véhicule (12) se déplace entre une position écartée et une position de stationnement par rapport au premier joint d'étanchéité (6720), le premier joint d'étanchéité (6720) ayant une partie de pénétration (6804) mobile entre un état relâché (6702) lorsque le véhicule (12) libère le premier joint d'étanchéité (6720), et un état activé (7002) lorsque le véhicule (12) se met en prise avec le premier joint d'étanchéité (6720) ; et
un second joint d'étanchéité (6712) destiné à être couplé adjacent au premier joint d'étanchéité (6720) ;
dans lequel le premier joint d'étanchéité (6720) comprend un joint d'étanchéité latéral (6720) et le second joint d'étanchéité (6712) comprend une structure de linteau (6704) ; et une poche (6802) ;
**caractérisé en ce que** :
la structure de linteau (6704) comprend : ladite poche (6802) ayant une ouverture (6812) positionnée au niveau d'une interface (6726) entre le premier joint d'étanchéité (6720) et le second joint d'étanchéité (6712),
dans lequel l'ouverture (6812) mène à une cavité (6820) définie par la poche (6802), la poche (6802) étant adjacente à la partie de pénétration (6804) du premier joint d'étanchéité (6720), de sorte qu'au moins la partie de pénétration (6804) s'étende à travers au moins une partie de l'ouverture (6812) lorsque le premier joint d'étanchéité (6720) est dans l'état relâché (6702), et l'ouverture (6812) du second joint d'étanchéité (6712) est destinée à recevoir au moins la partie de pénétration (6804) du premier joint d'étanchéité (6720) lorsque le premier joint d'étanchéité (6720) est dans l'état activé (7002).

2. Appareil-barrière contre les intempéries (6700) selon la revendication 1, dans lequel le premier joint d'étanchéité (6720) est positionné adjacent à un premier bord d'une porte (20), et le second joint d'étanchéité (6712) est positionné adjacent à un second bord de la porte (20), dans lequel le premier bord est non parallèle par rapport au second bord.

3. Appareil-barrière contre les intempéries (6700) selon la revendication 2, comprenant en outre un couvercle (110, 112, 114, 118, 120, 124, 134, 186, 200, 204, 294, 300) pour s'étendre à travers et obstruer l'ouverture (6812) lorsque l'appareil-barrière contre les intempéries (6700) est dans l'état relâché (6702), le couvercle (110, 112, 114, 118, 120, 124, 134, 186, 200, 204, 294, 300) étant mobile à l'intérieur de l'ouverture (6812) lorsque la partie de pénétration (6804) est déviée vers l'ouverture (6812).

4. Appareil-barrière contre les intempéries (6700) selon la revendication 1, dans lequel le premier joint d'étanchéité (6720) se met en prise avec un bord latéral vertical (38a) du véhicule (12) et le second joint d'étanchéité (6712) se met en prise avec un bord arrière supérieur (32) du véhicule (12) lorsque l'appareil-barrière contre les intempéries (6700) est dans l'état activé (7002).

5. Appareil-barrière contre les intempéries (6700) selon la revendication 1, dans lequel le second joint d'étanchéité (6712) est destiné à être positionné entre le premier joint d'étanchéité (6720) et une paroi (18) d'un quai de chargement (14).

6. Appareil-barrière contre les intempéries (6700) selon la revendication 1, dans lequel la structure de linteau (6704) peut être fixée à une paroi (18) à proximité d'une porte (20), la structure de linteau (6704) étant destinée à se mettre en prise avec au moins l'un parmi un toit (30) et un bord arrière supérieur (32) du véhicule (12) lorsque l'appareil-barrière contre les intempéries (6700) est destiné à se mettre en prise avec le véhicule (12) ;
la poche (6802) positionnée de manière adjacente à un premier bord sur le côté de la structure de linteau (6704) ;
un élément de support latéral (86) pouvant être fixé à la paroi (18) à proximité de la porte (20) ; et
le joint d'étanchéité latéral (6720) s'étendant à partir de l'élément de support latéral (86), le joint d'étanchéité latéral (6720) ayant une surface avant tournée à l'opposé de la porte (20) lorsque le joint d'étanchéité latéral (6720) est dans l'état relâché (6702) lorsque le véhicule est positionné loin de l'appareil-barrière contre les intempéries (6700).

7. Appareil-barrière contre les intempéries (6700) selon la revendication 6, dans lequel la structure de linteau (6704) comprend un panneau frontal (6810), le panneau frontal (6810) étant destiné à être orienté dans une direction opposée à la porte (20) lorsque la structure de linteau (6704) est montée sur la paroi (18), le panneau frontal (6810) ayant l'ouverture (6812) menant à la poche (6802).

8. Appareil-barrière contre les intempéries (6700) selon la revendication 6, dans lequel la poche (6802) est destinée à recevoir une partie du véhicule (12) lorsque le véhicule (12) se met en prise avec le joint d'étanchéité latéral (6720) et dévie le joint d'étanchéité latéral (6720) à l'intérieur de la poche (6802).

9. Appareil-barrière contre les intempéries (6700) selon la revendication 6, dans lequel la poche (6802) comprend un cadre (6814) ayant des parois (6822) qui définissent la poche (6802), les parois (6822) étant destinées à empêcher la circulation d'air à travers la poche (6802).

10. Appareil-barrière contre les intempéries (10) pour un quai de chargement (14), l'appareil-barrière contre les intempéries (10) ayant une position déviée lorsqu'il est en prise avec un bord arrière d'un véhicule (12) et une position non déviée lorsqu'il est espacé du bord arrière du véhicule (12), comprenant :
un élément de support latéral (86) pouvant être fixé à une paroi (18) à proximité d'une porte (20) du quai de chargement (14) ;
un joint d'étanchéité latéral (34a) pour s'étendre plus loin de l'élément de support latéral (86) vers un centre de la porte (20) lorsque l'appareil-barrière contre les intempéries (10) est dans la position non déviée que lorsque l'appareil-barrière contre les intempéries (10) est dans la position déviée ; et
un joint d'étanchéité supérieur (28) pouvant être fixé à la paroi (18) et positionné adjacent à l'élément de support latéral (86), de sorte qu'une première partie du joint d'étanchéité supérieur (28) et qu'une seconde partie du joint d'étanchéité latéral se chevauchent pour définir une interface ; dans lequel le joint d'étanchéité latéral (34a) comporte une poche (62) ;
**caractérisé en ce que** ;
le joint d'étanchéité latéral (34a) comporte ladite poche (62) avec une ouverture (64) adjacente à l'interface, l'ouverture (64) dans le joint d'étanchéité latéral (34a) étant destinée à recevoir au moins une partie du joint d'étanchéité supérieur (28) lorsque l'appareil-barrière contre les intempéries (10) est dans la position déviée.

11. Appareil-barrière contre les intempéries (10) selon la revendication 10, dans lequel le joint d'étanchéité latéral (34a) est positionné entre le joint d'étanchéité supérieur (28) et ladite paroi (18) du quai de chargement (14).
